(19) 

**Europäisches Patentamt**
**European Patent Office**
**Office européen des brevets**

(11) **EP 4 318 674 A1**

(12) **EUROPEAN PATENT APPLICATION**
published in accordance with Art. 153(4) EPC

(43) Date of publication:
**07.02.2024 Bulletin 2024/06**

(21) Application number: **22780956.3**

(22) Date of filing: **29.03.2022**

(51) International Patent Classification (IPC):
**H01M 4/587** (2010.01)     **H01M 4/133** (2010.01)
**H01M 4/36** (2006.01)

(52) Cooperative Patent Classification (CPC):
**H01M 4/133; H01M 4/36; H01M 4/587;** Y02E 60/10

(86) International application number:
**PCT/JP2022/015602**

(87) International publication number:
**WO 2022/210745 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.03.2021   JP 2021057505**
                **13.04.2021   JP 2021067417**

(71) Applicant: **Mitsubishi Chemical Corporation**
**Chiyoda-ku**
**Tokyo 100-8251 (JP)**

(72) Inventors:
• **HASEGAWA, Tatsuya**
**Tokyo 100-8251 (JP)**

• **SHITO, Keiji**
**Tokyo 100-8251 (JP)**
• **KATO, Hanako**
**Tokyo 100-8251 (JP)**
• **MUKUNOKI, Kazunori**
**Tokyo 100-8251 (JP)**
• **HATAKEYAMA, Hiroki**
**Tokyo 100-8251 (JP)**
• **SEKI, Keiichi**
**Tokyo 100-8251 (JP)**

(74) Representative: **Vossius & Partner**
**Patentanwälte Rechtsanwälte mbB**
**Siebertstrasse 3**
**81675 München (DE)**

(54) **COATED CARBON MATERIAL, NEGATIVE ELECTRODE AND SECONDARY BATTERY**

(57)     The present invention has been made in view of such background arts, and an object thereof is to provide a coated carbon material that can provide a secondary battery not only maintaining capacity, but also having excellent initial efficiency, as compared with a conventional art, and as a result, to provide a high-performance secondary battery. A coated carbon material where a carbon material is coated with a coating film, in which the coating film includes at least one selected from the following compound (X) and a crosslinked product of the following compounds (Y): (X): an acetoacetyl group-containing resin, and (Y): a polyvinyl alcohol-based resin and a silicon element-containing compound.

EP 4 318 674 A1

**Description**

TECHNICAL FIELD

The present invention relates to a coated carbon material, a negative electrode with the coated carbon material, a secondary battery including the negative electrode, and a method for producing the coated carbon material.

BACKGROUND ART

In recent years, high-capacity secondary batteries have been increasingly demanded according to miniaturization of electronic equipment. In particular, lithium ion secondary batteries higher in energy density and more excellent in high-current charge and discharge characteristics than nickel/cadmium batteries and nickel/hydrogen batteries have increasingly attracted attention. While increases in capacities of lithium ion secondary batteries have been conventionally widely studied, further increases in performances of lithium ion secondary batteries have been increasingly demanded in recent years, and further increases in capacities, increase in input-output, and increases in lifetimes have been demanded to be achieved.

It is known with respect to lithium ion secondary batteries to use carbon materials such as graphite as negative electrode active materials. In particular, it is known that graphite high in degree of graphitization, when used for negative electrode active materials for lithium ion secondary batteries, provides a capacity close to 372 mAh/g corresponding to the theoretical capacity in lithium intercalation of graphite, and furthermore is also excellent in cost/durability and thus is preferable for negative electrode active materials. On the other hand, a problem is that, if active material layers including negative electrode materials are increased in densities for increases in capacities, such materials are broken/deformed to cause increases in charge and discharge irreversible capacities in the initial cycle, deterioration in high-current charge and discharge characteristics, and deterioration in cycle characteristics.

When carbon materials described above are used for negative electrode active materials of lithium ion secondary batteries, protective coating films called SEIs (Solid Electrolyte Interfaces) are usually formed on carbon material surfaces by reaction with polymer compounds for use in binders or the like, or non-aqueous electrolytic solutions. It is known that SEIs prevent carbon materials and electrolytic solutions from being contacted, inhibit electrolytic solutions from being, for example, decomposed by active carbon materials, and allow chemical stability of negative electrode surfaces to be kept.

However, a problem is that lithium ion secondary batteries with carbon materials as negative electrode active materials are increased in charge and discharge irreversible capacities in the initial cycle due to SEI coating film formation and generation of a gas as a by-product, resulting in no increases in capacities. Furthermore, a problem is also that stable SEI coating films are formed to thereby cause increases in interface resistances in negative electrodes and deterioration in input-output characteristics of batteries.

In order to solve the above problems, for example, Patent Document 1 discloses the development of a technique including subjecting natural graphite to spheronization treatment (mechanical energy treatment) to thereby produce spheronized natural graphite and furthermore adopting the spheronized natural graphite as nuclear graphite to thereby a surface of the graphite with amorphous carbon. However, the spheronized natural graphite disclosed in Patent Document 1, although provides a high capacity and favorable and rapid charge and discharge characteristics, causes excess decomposition of an electrolytic solution, thus causes insufficient initial irreversible capacity and charge and discharge cycle characteristics and also increases the amount of generation of a by-product gas, and is required to be further improved.

On the other hand, methods for coating carbon materials as negative electrode active materials with polymers or the like are known as techniques for suppressing excess decomposition of electrolytic solutions. For example, Patent Document 2 discloses a method for providing a coating layer made of an ion-conducting polymer such as polyethylene oxide and/or a water-soluble polymer such as polyvinyl alcohol, on a surface of a carbon material, for the purpose of suppressing decomposition of a non-aqueous electrolytic solution and deposition of its decomposition product on a negative electrode surface to result in improvements in initial charge and discharge efficiency and in charge and discharge cycle characteristics.

Patent Document 3 discloses a method for impregnating spheronized natural graphite enhanced in adhesiveness to a water-soluble polymer by impartation of a surface oxygen functional group, with a water-soluble polymer, for the purpose of suppressing decomposition of a non-aqueous electrolytic solution to result in an improvement in initial charge and discharge efficiency. Patent Document 4 discloses a method for providing a coating film containing, on a surface of a carbon material, a boron atom and a C-O-C bond moiety-containing crosslinking site interposed between the boron atom and such a negative electrode active material, for the purpose of suppressing an increase in internal resistance after a charge and discharge cycle to result in improvements in cycle characteristics.

RELATED ART DOCUMENT

PATENT DOCUMENT

[Patent Document 1] Japanese Examined Patent Publication No. 3534391
[Patent Document 2] Japanese Unexamined Patent Publication No. H11-120992
[Patent Document 3] Japanese Unexamined Patent Publication No. 2011-198710
[Patent Document 4] Japanese Unexamined Patent Publication No. 2019-87443

SUMMARY OF THE INVENTION

PROBLEMS TO BE SOLVED BY THE INVENTION

However, it has been revealed according to studies made by the present inventors that the spheronized natural graphite disclosed in Patent Document 1, although provides a high capacity and favorable and rapid charge and discharge characteristics, causes excess decomposition of a non-aqueous electrolytic solution, thus causes insufficient initial charge and discharge efficiency and charge and discharge cycle characteristics and also increases the amount of generation of a by-product gas, and is required to be further improved.

In addition, if a carbon material is coated with the ion-conducting polymer or water-soluble polymer disclosed in Patent Document 2, adhesiveness to the carbon material is insufficient and swellability with an electrolytic solution is exhibited, and thus use of the carbon material in a negative electrode active material still leads to insufficient initial charge and discharge efficiency, charge and discharge cycle characteristics, and stability.

It has been revealed that, while a carbon material where the polymer disclosed in Patent Document 3 is attached to the carbon material is enhanced in adhesiveness of the carbon material to the polymer to result in enhancements in initial charge and discharge efficiency and in stability, an intercalation/deintercalation site for Li ions is excessively covered and furthermore the ion conductivity of the polymer used is also insufficient and thus low-temperature input-output characteristics are insufficient.

The technique disclosed in Patent Document 4 causes elution of boron for coating, and/or swelling with polyvinyl alcohol, leading to deterioration in coatability due to an increase in slurry viscosity, and an insufficient improvement in initial efficiency.

The present invention has been made in view of such background arts, and an object thereof is to provide a coated carbon material that can provide a secondary battery not only maintaining capacity, but also having excellent initial efficiency, as compared with a conventional art, and as a result, to provide a high-performance secondary battery.

MEANS FOR SOLVING THE PROBLEMS

The present inventors have made intensive studies in order to solve the above problems, and as a result, have found that the above problems can be solved by a coated carbon material where a specified coating film is formed on a carbon material surface, a negative electrode with the coated carbon material, and a secondary battery including the negative electrode, and have completed the present invention.

The reason why the coated carbon material according to the present invention exerts the above effects is considered by the present inventors, as follows.

In other words, it is considered by the present inventors that a coating film with which a carbon material is coated importantly satisfies at least one condition selected from the following conditions (1) and (2).

Condition (1): the coating film includes an acetoacetyl group-containing resin. It is considered that such a resin having an acetoacetyl group as a self-crosslinkable group is crosslinked on a coated carbon material surface and is inhibited from being swollen or eluted, thereby allowing for remarkable exertion of the effects of improvements in slurry properties and of an improvement in initial efficiency imparted by suppression of a side reaction with an electrolytic solution due to efficient coating.

Condition (2): the coating film includes a crosslinked product of a polyvinyl alcohol-based resin and a silicon element-containing compound. It is considered that the silicon element-containing compound as a crosslinking agent, included together with the polyvinyl alcohol-based resin, is crosslinked on a coated carbon material surface and such a polymer is inhibited from being swollen or eluted, thereby allowing for remarkable exertion of the effects of improvements in slurry properties and of an improvement in initial efficiency imparted by suppression of a side reaction with an electrolytic solution due to efficient coating. It is also considered that, when a boron element-containing compound (also simply referred to as "boron compound".) is further included in the coating film, the effects can be further remarkably exerted by suppression of elution of the boron compound due to a crosslinked structure on the coated carbon material surface.

In other words, the gist of the present invention is as follows.

[1] A coated carbon material where a carbon material is coated with a coating film, wherein
the coating film comprises at least one selected from the following compound (X) and a crosslinked product of the following compounds (Y):

(X): an acetoacetyl group-containing resin
(Y): a polyvinyl alcohol-based resin and a silicon element-containing compound.

[2] The coated carbon material according to [1], wherein the carbon material is graphite.
[3] The coated carbon material according to [1] or [2], wherein a basal plane of the carbon material is coated with the coating film.
[4] The coated carbon material according to any of [1] to [3], wherein the coating film comprises the compound (X).
[5] The coated carbon material according to [4], wherein the acetoacetyl group-containing resin contains a hydroxyl group.
[6] The coated carbon material according to [4] or [5], wherein the acetoacetyl group-containing resin is a polyvinyl alcohol-based resin containing an acetoacetyl group.
[7] The coated carbon material according to any of [1] to [3], wherein the coating film comprises the crosslinked product of the compounds (Y).
[8] The coated carbon material according to [7], wherein the polyvinyl alcohol-based resin contains an acetoacetyl group.
[9] The coated carbon material according to [7] or [8], wherein the coating film further comprises a boron element-containing compound.
[10] The coated carbon material according to [9], wherein the boron element-containing compound is at least one compound selected from boron oxide, metaboric acid, tetraboric acid, borate, and an alkoxide having 1 to 3 carbon atoms bound to boron.
[11] A method for producing a coated carbon material where a carbon material is coated with a coating film, the method comprising
mixing a carbon material with the following compound (X) and/or the following compounds (Y):

(X): an acetoacetyl group-containing resin
(Y): a polyvinyl alcohol-based resin and a silicon element-containing compound.

[12] A negative electrode comprising a current collector and an active material layer formed on the current collector, wherein
the active material layer comprises the coated carbon material according to any of [1] to [10].
[13] A secondary battery comprising a positive electrode, a negative electrode, and an electrolyte, wherein
the negative electrode is the negative electrode according to [12].

EFFECTS OF THE INVENTION

The coated carbon material of the present invention can be used in a negative electrode active material for a secondary battery to thereby provide a secondary battery that not only maintains capacity, but also is excellent in initial efficiency.

MODE FOR CARRYING OUT THE INVENTION

Hereinafter, the content of the present invention will be described in detail. It is noted that the description of components of the invention, described below, corresponds to one example (representative example) of aspects of the present invention and the present invention is not specified by such aspects without departing the gist thereof.
A numerical value range herein expressed by use of "to" means a range including respectively numerical values described before and after "to" as a lower limit value and an upper limit value, and the "A to B" means A or more and B or less.

<Coated carbon material>

A coated carbon material (which may also be referred to as "negative electrode material".) according to one embodiment of the present invention is not particularly limited as long as it is a coated carbon material capable of intercalating/deintercalating a lithium ion, which is

a coated carbon material where a carbon material is coated with a coating film, wherein
the coating film (also simply referred to as "film".) includes at least one selected from the following compound (X) and a crosslinked product of the following compounds (Y) :

(X): an acetoacetyl group-containing resin
(Y): a polyvinyl alcohol-based resin and a silicon element-containing compound.

The above coating may be a coating including at least one film selected from a film including the compound (X) and a film including the crosslinked product of the compounds (Y) (the coating may be a coating film made of the film). The above coating film may or may not include any component other than the compound (X) and the crosslinked product of the compounds (Y), may be constituted from only the compound (X), may be constituted from only the crosslinked product of the compounds (Y), or may be a stacked film of a film including the compound (X) and a film including the crosslinked product of the compounds (Y).

Examples of the carbon material include graphite, amorphous carbon, or a carbonaceous substance low in degree of graphitization. In particular, graphite is preferable because of being commercially easily available, having a high charge and discharge capacity of 372 mAh/g in theory, and furthermore having a large improvement effect of charge and discharge characteristics at a high current density as compared with the case of use of other negative electrode active material. The graphite is preferably one having small amounts of impurities, and can be, if necessary, subjected to any known purification treatment, and then used. Examples of the type of the graphite include natural graphite or artificial graphite, and natural graphite is more preferable.

One coated with a carbonaceous substance, for example, amorphous carbon or a graphitized product may also be used. In the present embodiment, such one can be used singly or in combination of two or more kinds thereof.

Examples of the artificial graphite include one obtained by firing and graphitizing an organic substance such as coal-tar pitch, a coal-based heavy oil, an atmospheric residue, a petroleum-based heavy oil, aromatic hydrocarbon, a nitrogen-containing cyclic compound, a sulfur-containing cyclic compound, polyphenylene, polyvinyl chloride, polyvinyl alcohol, polyacrylonitrile, polyvinyl butyral, a natural polymer, polyphenylene sulfide, polyphenylene oxide, a furfuryl alcohol resin, a phenolformaldehyde resin, or an imide resin.

The firing temperature can be within the range of 2500°C or more and 3200°C or less, and a silicon-containing compound, a boron-containing compound, or the like can also be used as a graphitization catalyst during the firing.

Examples of the natural graphite include flaky graphite increased in purity, and graphite subjected to spheronization treatment. In particular, natural graphite subjected to spheronization treatment is further preferable from the viewpoints of particle packing ability and charge and discharge loading characteristics.

The apparatus for use in the spheronization treatment can be, for example, an apparatus that repeatedly applies to a particle, mainly an impact force, and mechanical action such as compression, friction, or a shear force, including interaction of graphite carbonaceous substance particles.

Specifically, an apparatus is preferable which has a rotor with many blades disposed in a casing and which applies mechanical action such as impact compression, friction, or a shear force to the carbon material introduced into the interior, due to high-speed rotation of the rotor, to thereby perform surface treatment. One is preferable which has a mechanism that repeatedly applies such mechanical action by circulation of the graphite.

Examples of a preferable apparatus that applies such mechanical action to the carbon material include a hybridization system (manufactured by NARA MACHINERY CO., LTD.), Criptron (manufactured by EARTHTECHNICA Co., Ltd.), a CF mill (manufactured by UBE Corporation), a Mechanofusion system (manufactured by Hosokawa Micron), or a theta composer (manufactured by TOKUJU Co., LTD.). In particular, a hybridization system manufactured by NARA MACHINERY CO., LTD. is preferable.

In the case of treatment with the apparatus, for example, the peripheral velocity of the rotor rotated is preferably 30 to 100 m/sec, more preferably 40 to 100 m/sec, particularly preferably 50 to 100 m/sec. While the treatment for application of such mechanical action to the carbon material can also be made by simply allowing the graphite to pass through, a treatment where the graphite is circulated or retained in the apparatus for 30 seconds or more is preferable, and a treatment where the graphite is circulated or retained in the apparatus for 1 minute or more is more preferable.

Examples of the amorphous carbon include a particle obtained by firing a bulk mesophase and a particle obtained by subjecting a carbon precursor to infusibilization treatment and firing the resultant.

Examples of the carbonaceous substance low in degree of graphitization include an organic substance fired at a temperature of usually less than 2500°C. Examples of the organic substance include a coal-based heavy oil such as coal-tar pitch or a carbonized liquefied oil; a straight heavy oil such as an atmospheric residue or a vacuum residue; a decomposition heavy oil such as ethylene tar as a by-product in thermal cracking of crude oil, naphtha or the like; aromatic hydrocarbon such as acenaphthylene, decacyclene, or anthracene; a nitrogen-containing cyclic compound such as phenazine or acridine; a sulfur-containing cyclic compound such as thiophene; an aliphatic cyclic compound such as adamantane; polyphenylene such as biphenyl or terphenyl, polyvinyl chloride, polyvinyl ester such as polyvinyl acetate or polyvinyl butyral, or a thermoplastic polymer such as polyvinyl alcohol.

The firing temperature can be 600°C or more depending on the degree of graphitization of the carbonaceous substance and is preferably 900°C or more, more preferably 950°C or more, and can be less than 2500°C and is preferably within the range of 2000°C or less, more preferably 1400°C or less.

The organic substance, when fired, can also be mixed with an acid compound such as phosphoric acid, boric acid, or hydrochloric acid, or an alkali compound such as sodium hydroxide.

The carbon material here used can also be a particle obtained by coating the above natural graphite or artificial graphite with amorphous carbon and/or a graphite substance low in degree of graphitization.

The carbon material constituting the carbon material can also be used in combination with one, or two or more of other carbon materials.

The carbon material may contain a Si-containing compound, and examples of the Si-containing compound include a negative electrode active material including a composite oxide phase containing lithium silicate, and a silicon particle dispersed in the composite oxide phase.

<Physical properties of carbon material>

The following describes preferable characteristics of the carbon material serving as a raw material. Hereinafter, the carbon material may be appropriately referred to as the carbon material of the present embodiment, or simply referred to as the carbon material.

· Volume-based average particle diameter (average particle diameter d50)

The volume-based average particle diameter (also designated as "average particle diameter d50") of the carbon material of the present embodiment is preferably 1 μm or more, more preferably 5 μm or more, further preferably 10 μm or more, particularly preferably 15 μm or more, most preferably 16.5 μm or more. The average particle diameter d50 is preferably 50 um or less, more preferably 40 um or less, further preferably 35 um or less, particularly preferably 30 um or less, most preferably 25 um or less. When the average particle diameter d50 is in the above range, a secondary battery (in particular, non-aqueous secondary battery) obtained with the carbon material is suppressed in an increase in irreversible capacity and loss in initial battery capacity, and the occurrence of process failure such as streak in slurry coating, deterioration in high-current-density charge and discharge characteristics, and deterioration in low-temperature input-output characteristics are suppressed.

The average particle diameter d50 is herein defined as one determined by suspending 0.01 g of the carbon material in 10 mL of an aqueous 0.2% by mass solution of polyoxyethylene sorbitan monolaurate (examples include Tween 20 (registered trademark)) as a surfactant to provide a measurement sample, introducing the measurement sample to a commercially available laser diffraction/scattering particle size distribution measurement apparatus (for example, LA-920 manufactured by HORIBA Ltd.), irradiating the measurement sample with 28 kHz ultrasonic wave at an output of 60 W for 1 minute, and then measuring the volume-based median diameter with the measurement apparatus.

· Degree of circularity

The degree of circularity of the carbon material of the present embodiment is 0.88 or more, preferably 0.90 or more, more preferably 0.91 or more. The degree of circularity is preferably 1 or less, more preferably 0.98 or less, further preferably 0.97 or less. When the degree of circularity is within the above range, deterioration in high-current-density charge and discharge characteristics of a secondary battery (in particular, non-aqueous secondary battery) tends to be able to be suppressed. The degree of circularity is defined by the following expression, and a degree of circularity of 1 means a theoretically true sphere.

$$\text{Degree of circularity} = \text{(Boundary length of corresponding circle having same area as in particle projection shape)/(Actual boundary length of particle projection shape)}$$

The value of the degree of circularity, here adopted, can be, for example, a value determined by using a flow type particle image analyzer (for example, FPIA manufactured by Sysmex Industrial), dispersing about 0.2 g of a specimen (carbon material) in an aqueous 0.2% by mass solution (about 50 mL) of polyoxyethylene (20) sorbitan monolaurate as a surfactant, irradiating the dispersion liquid with 28 kHz ultrasonic wave at an output of 60 W for 1 minute, and then indicating the detection range to 0.6 to 400 $\mu$m and subjecting a particle having a particle diameter in the range from 1.5 to 40 $\mu$m, to measurement.

The method for enhancing the degree of circularity is not particularly limited, but one involving spheronization by application of spheronization treatment is preferable because the shape of an inter-particle void in a negative electrode formed is tailored. Examples of the spheronization treatment include a method for mechanical approximation to a spherical shape by application of a shear force and/or a compression force, and a mechanical/physical treatment method for granulating a plurality of carbon material fine particles by an attachment force of a binder or the particles themselves.

· Tap density

The tap density of the carbon material of the present embodiment is preferably 0.7 g/cm$^3$ or more, more preferably 0.8 g/cm$^3$ or more, further preferably 0.85 g/cm$^3$ or more, particularly preferably 0.9 g/cm$^3$ or more, most preferably 0.95 g/cm$^3$ or more, preferably 1.3 g/cm$^3$ or less, more preferably 1.2 g/cm$^3$ or less, further preferably 1.1 g/cm$^3$ or less.

When the tap density is within the above range, processability, for example, streak is improved during electrode sheet production and high-speed charge and discharge characteristics are excellent. The carbon density in a particle is hardly increased and thus rollability is also favorable, and a high-density negative electrode sheet tends to be easily formed.

The tap density is defined as the density determined from the volume and the mass of a specimen, which are measured with a powder density measurement tool by dropping the carbon material of the present embodiment through a sieve with an aperture of 300 $\mu$m onto a cylindrical tap cell having a diameter of 1.6 cm and a volume of 20 cm$^3$ to fill the cell and then performing tapping of a stroke length of 10 mm 1000 times.

· X-ray parameter

The value of d (interlayer distance) of the lattice place (002 plane) of the carbon material of the present embodiment, determined by X-ray diffraction according to the Gakushin method, is preferably 0.335 nm or more and less than 0.340 nm. The value of d is here more preferably 0.339 nm or less, further preferably 0.337 nm or less. When the value of d002 is within the above range, crystallinity of graphite is high, resulting in tendency to suppress an increase in initial irreversible capacity. A value of 0.335 nm corresponds to the theoretical value of graphite.

The crystallite size (Lc) of the carbon material, determined by X-ray diffraction according to the Gakushin method, is preferably within the range of 1.5 nm or more, more preferably 3.0 nm or more. When the size is within the above range, a particle not too low in crystallinity is obtained and the reversible capacity is hardly decreased in the case of a secondary battery (in particular, non-aqueous secondary battery) formed. Herein, the lower limit of Lc corresponds to the theoretical value of graphite.

· Ash content

The ash content included in the carbon material of the present embodiment is preferably 1% by mass or less, more preferably 0.5% by mass or less, further preferably 0.1% by mass or less based on the total mass of the carbon material. The lower limit of the ash content is preferably 1 ppm or more.

When the ash content is within the above range, degradation in battery performance due to reaction of the carbon material and an electrolytic solution during charge and discharge can be suppressed to a negligible level in the case of a secondary battery (in particular, non-aqueous secondary battery) formed. In addition, excessive amounts of time and energy, and facilities for contamination prevention are not needed for production of the carbon material, and thus an increase in cost is also suppressed.

· BET specific surface area (SA)

The specific surface area (SA) of the carbon material of the present embodiment, measured by the BET method, is preferably 2 m$^2$/g or more, more preferably 2.4 m$^2$/g or more, further preferably 2.6 m$^2$/g or more, particularly preferably 2.8 m$^2$/g or more, most preferably 3.0 m$^2$/g or more, and preferably 13 m$^2$/g or less, more preferably 12 m$^2$/g or less, further preferably 11 m$^2$/g or less, particularly preferably 10 m$^2$/g or less, most preferably 9 m$^2$/g or less.

When the specific surface area is within the above range, a site for passage of Li can be sufficiently ensured, and thus high-speed charge and discharge characteristics and output characteristics are excellent and the activity of an active material to an electrolytic solution can also be properly suppressed to thereby lead to no increase in initial irreversible capacity, resulting in a tendency to enable a high-capacity battery to be produced.

When a negative electrode is formed with the carbon material, an increase in reactivity thereof with an electrolytic solution can be suppressed and gas generation can be suppressed, and thus a preferable secondary battery (in particular, non-aqueous secondary battery) can be provided.

The BET specific surface area is defined as the value obtained by subjecting a carbon material specimen preliminarily dried under reduced pressure at 100°C for 30 minutes under a nitrogen stream and then cooled to a liquid nitrogen temperature, to measurement with a surface area meter (for example, Macsorb HM Model-1210 manufactured by MOUNTECH Co., Ltd.), according to a nitrogen adsorption BET one-point method with a nitrogen gas.

· Pore volume in range from 10 nm to 1000 nm

The pore volume in the range from 10 nm to 1000 nm in the carbon material of the present embodiment is a value measured by a mercury intrusion method (mercury porosimetry), and is preferably 0.05 mL/g or more, more preferably 0.07 mL/g or more, further preferably 0.1 mL/g or more, and preferably 0.3 mL/g or less, more preferably 0.28 mL/g or less, further preferably 0.25 mL/g or less.

When the pore volume in the range from 10 nm to 1000 nm is within the above range, a void into which an electrolytic solution (in particular, non-aqueous electrolytic solution) can penetrate is hardly decreased and a tendency to cause too late intercalation/deintercalation of a lithium ion in rapid charge and discharge and accordingly deposition of lithium metal and deterioration in cycle characteristics can be more avoided. Furthermore, a binder is hardly absorbed in such a void in electrode sheet production, and accordingly a tendency to cause deterioration in electrode sheet strength and deterioration in initial efficiency can also be more avoided.

The total pore volume in the carbon material of the present embodiment is preferably 0.1 mL/g or more, more preferably 0.2 mL/g or more, further preferably 0.25 mL/g or more, particularly preferably 0.5 mL/g or more. The total pore volume is preferably 10 mL/g or less, more preferably 5 mL/g or less, further preferably 2 mL/g or less, particularly preferably 1 mL/g or less.

When the total pore volume is within the above range, the amount of a binder in electrode sheet formation is not required to be excess, and the dispersion effect of a thickener and/or a binder in electrode sheet formation is also easily obtained.

The average pore size of the carbon material of the present embodiment is preferably 0.03 μm or more, more preferably 0.05 μm or more, further preferably 0.1 μm or more, particularly preferably 0.5 μm or more. The average pore size is preferably 80 μm or less, more preferably 50 um or less, further preferably 20 μm or less.

When the average pore size is within the above range, the amount of a binder in electrode sheet formation is not required to be excess, and deterioration in high-current-density charge and discharge characteristics of a battery tends to be able to be avoided.

A mercury porosimeter (AutoPore 9520: manufactured by Micromeritics Instrument Corporation) can be used as the apparatus for mercury porosimetry. A specimen (carbon material) is weighed so as to be in an amount of about 0.2 g, enclosed in a cell for a powder, and subjected to pretreatment by degassing under vacuum (50 pmHg or less) at 25°C for 10 minutes.

Subsequently, the pressure was reduced to 4 psia (about 28 kPa) and mercury is introduced to the cell, and the pressure is increased stepwise from 4 psia (about 28 kPa) to 40000 psia (about 280 MPa) and then reduced to 25 psia (about 170 kPa).

The number of steps during pressure increase is 80 points or more, and the amount of mercury intrusion is measured after an equilibrium time of 10 seconds in each step. A pore distribution is calculated based on the mercury intrusion curve thus obtained, by use of the Washburn's equation.

The calculation is made under the assumption that the surface tension ($\gamma$) and the contact angle ($\psi$) of mercury are respectively 485 dyne/cm and 140°. The average pore size is defined as the pore size at which the cumulative pore volume corresponds to 50%.

· True density

The true density of the carbon material of the present embodiment is preferably 1.9 $g/cm^3$ or more, more preferably 2 $g/cm^3$ or more, further preferably 2.1 $g/cm^3$ or more, particularly preferably 2.2 $g/cm^3$ or more, and the upper limit thereof is 2.26 $g/cm^3$. The upper limit is the theoretical value of graphite. When the true density is within the above range, crystallinity of carbon is not too low, and an increase in initial irreversible capacity in the case of a secondary battery (in particular, non-aqueous secondary battery) formed tends to be able to be suppressed.

· Aspect ratio

The aspect ratio of the carbon material of the present embodiment in the form of a powder is 1 or more in theory, and is preferably 1.1 or more, more preferably 1.2 or more. The aspect ratio is preferably 10 or less, more preferably 8 or less, further preferably 5 or less.

When the aspect ratio is within the above range, there are tendencies to hardly cause streak with a slurry (negative electrode-forming material) including the carbon material in electrode sheet formation, to obtain a uniform coating surface, and to avoid deterioration in high-current-density charge and discharge characteristics of a secondary battery (in particular, non-aqueous secondary battery).

The aspect ratio is expressed by A/B under the assumption that, when a carbon material particle (carbon material) is three-dimensionally observed, the longest diameter and the shortest diameter perpendicular thereto are respectively defined as the diameter A and the diameter B. The carbon material particle is observed with a scanning electron microscope that can perform magnification observation. Any 50 such carbon material particles fixed to an end of a metal having a thickness of 50 microns or less are selected, the stage to which such each specimen is fixed is rotated and inclined to measure A and B, and the average value with respect to A/B is determined.

· Maximum particle diameter dmax

The maximum particle diameter dmax of the carbon material of the present embodiment is preferably 200 $\mu$m or less, more preferably 150 $\mu$m or less, further preferably 120 $\mu$m or less, particularly preferably 100 $\mu$m or less, most preferably 80 $\mu$m or less. When the dmax is within the above range, the occurrence of any process failure such as streak tends to be able to be suppressed.

The maximum particle diameter is defined as the value of the largest particle diameter in particle measurement, in a particle size distribution obtained in measurement of the average particle diameter d50.

· Raman R value

The Raman R value of the carbon material of the present embodiment is preferably 0.1 or more, more preferably 0.15 or more, further preferably 0.2 or more. The Raman R value is preferably 0.6 or less, more preferably 0.5 or less, further preferably 0.4 or less.

The Raman R value is defined as one calculated as the intensity ratio ($I_B/I_A$) determined in measurement of the intensity $I_A$ of the peak $P_A$ around 1580 $cm^{-1}$ and the intensity $I_B$ of the peak $P_B$ around 1360 $cm^{-1}$ in a Raman spectrum determined by Raman spectroscopy.

Herein, the "around 1580 $cm^{-1}$" refers to the range from 1580 to 1620 $cm^{-1}$ and the "around 1360 $cm^{-1}$" refers to the range from 1350 to 1370 $cm^{-1}$.

When the Raman R value is within the above range, there are tendencies to hardly increase crystallinity of a carbon material particle (carbon material) surface, to hardly orient any crystal in a parallel direction to a negative electrode sheet in the case of an increase in density, and to avoid deterioration in load characteristics. There are further tendencies to also hardly disturb any crystal on the particle surface, to suppress an increase in reactivity of a negative electrode with an electrolytic solution, and enable deterioration in charge and discharge efficiency of a secondary battery (in particular, non-aqueous secondary battery) and increase of gas generation to be avoided.

The Raman spectrum can be measured with a Raman spectrometer. Specifically, a particle to be measured is naturally dropped into a measurement cell to thereby pack a specimen, and measurement is performed while the interior of the measurement cell is irradiated with argon ion laser and the measurement cell is rotated in a plane perpendicular to such laser light. Measurement conditions are as follows.

Wavelength of argon ion laser light: 514.5 nm
Laser power on specimen: 25 mW
Resolution: 4 $cm^{-1}$
Measurement range: 1100 $cm^{-1}$ to 1730 $cm^{-1}$

Peak intensity measurement, peak half-value width: background treatment, smoothing treatment (convolution by simple average, 5 points)

· Amount of DBP oil absorption

The amount of DBP (dibutyl phthalate) oil absorption of the carbon material of the present embodiment is preferably 65 ml/100 g or less, more preferably 62 ml/100 g or less, further preferably 60 ml/100 g or less, particularly preferably 57 ml/100 g or less. The amount of DBP oil absorption is preferably 30 ml/100 g or more, more preferably 40 ml/100 g or more.

When the amount of DBP oil absorption is within the above range, it is meant that the degree of progress of spheronization of the carbon material is sufficient, there is a tendency to hardly cause streak in coating with a slurry including the carbon material, and there is a tendency to avoid decrease of a reaction surface because of the presence of a pore structure also in a particle.

The amount of DBP oil absorption is defined as the value measured by charging 40 g of a measurement material (carbon material) and setting the dripping rate to 4 ml/min, the rotational speed to 125 rpm, and the set torque to 500 N·m, according to ISO 4546. For example, Absorptometer Type E manufactured by Brabender Technologies Inc. can be used in such measurement.

• Average particle diameter d10

The particle diameter (d10) at which the cumulative particle diameter from the small particle side in volume-based measurement of the carbon material of the present embodiment reaches 10% is preferably 30 $\mu$m or less, more preferably 20 $\mu$m or less, further preferably 17 $\mu$m or less, preferably 1 $\mu$m or more, more preferably 5 $\mu$m or more, further preferably 10 $\mu$m or more, particularly preferably 11 $\mu$m or more, most preferably 13 $\mu$m or more.

When the d10 is within the above range, a tendency of particle aggregation is not too strong, and the occurrence of any process failure such as an increase in slurry viscosity, and deterioration in electrode strength and deterioration in initial charge and discharge efficiency in a secondary battery (in particular, non-aqueous secondary battery) can be avoided. In addition, deterioration in high-current-density charge and discharge characteristics, and deterioration in low-temperature input-output characteristics tends to be able to be avoided.

The d10 is defined as the value at which the particle frequency percentage reaches 10% in accumulation from the smaller particle diameter in a particle size distribution obtained in measurement of the average particle diameter d50.

· Average particle diameter d90

The particle diameter (d90) at which the cumulative particle diameter from the small particle side in volume-based measurement of the carbon material of the present embodiment reaches 90% is preferably 100 um or less, more preferably 70 um or less, further preferably 60 um or less, still further preferably 50 $\mu$m or less, particularly preferably 45 $\mu$m or less, most preferably 42 um or less, and preferably 20 $\mu$m or more, more preferably 26 $\mu$m or more, further preferably 30 $\mu$m or more, particularly preferably 34 $\mu$m or more.

When the d90 is within the above range, there are tendencies to enable deterioration in electrode strength and deterioration in initial charge and discharge efficiency to be avoided in a secondary battery (in particular, non-aqueous secondary battery) and also to enable the occurrence of process failure such as streak in coating with slurry, deterioration in high-current-density charge and discharge characteristics, and deterioration in low-temperature input-output characteristics to be avoided.

The d90 is defined as the value at which the particle frequency percentage reaches 90% in accumulation from the smaller particle diameter in a particle size distribution obtained in measurement of the average particle diameter d50.

<Resin>

Acetoacetyl group-containing resin of (X)

When the coating film according to the present embodiment includes the acetoacetyl group-containing resin according to the (X), the compound of the acetoacetyl group-containing resin may be a single compound or may be a mixture of two or more compounds. The acetoacetyl group-containing resin can be used to thereby provide a coated carbon material that can provide a secondary battery maintaining capacity as compared with a conventional art.

A preferable structure of the acetoacetyl group-containing resin according to the (X) of the present embodiment preferably has at least one structure selected from the group consisting of a straight structure, a graft type structure, a star type structure, and a three-dimensional network structure.

The acetoacetyl group-containing resin may have a functional group other than an acetoacetyl group, and preferably has, for example, a hydroxyl group (in particular, alcoholic hydroxyl group) because a covalent bond high in reaction activity and excellent in water resistance and solvent resistance can be formed.

Here, the compound (X) and the crosslinked product of the compounds (Y) may be overlapped, and thus the compound (X) may be regarded as one except for the crosslinked product of the compounds (Y). Examples of a case where the above overlapping occurs include a case where the polyvinyl alcohol-based resin of the (Y) is an acetoacetyl group-containing resin.

The acetoacetyl group-containing resin is more preferably poorly soluble in an electrolytic solution (non-aqueous electrolytic solution) from the viewpoint that a secondary-battery negative-electrode active material (in particular, non-aqueous secondary-battery negative-electrode active material) is enhanced in resistance to an electrolytic solution and the coating film of the coated carbon material is hardly eluted in an electrolytic solution. In the present embodiment, even if the acetoacetyl group-containing resin can be dissolved in an electrolytic solution (in particular, non-aqueous electrolytic solution), the resin can react with a crosslinking agent to be thereby cured, and thus can be poorly soluble in an electrolytic solution. The "poor solubility" in an electrolytic solution (non-aqueous electrolytic solution) means that, when the acetoacetyl group-containing resin is immersed in a mixed solvent of ethylene carbonate and ethyl methyl carbonate (a volume ratio of 3:7) at a mass ratio of 1:50 (acetoacetyl group-containing resin: solvent) at 60°C for 5 hours, the dry mass reduction rate before and after immersion is 10% by mass or less.

The resin of a resin section excluding an acetoacetyl group of the acetoacetyl group-containing resin according to the (X) of the present embodiment is not particularly limited, and, specifically, is preferably a polyol-based resin such as a polyvinyl alcohol-based resin, an acrylic polyol resin, a polyester polyol resin, or a polyether polyol resin, a silicone resin, an epoxy resin, an acrylic resin having a hydrolyzable silyl group, or a polyester resin, more preferably a polyvinyl alcohol-based resin, an acrylic polyol resin, a polyester polyol resin, an acrylic resin having a hydrolyzable silyl group, or a polyester resin, particularly preferably a polyvinyl alcohol-based resin, an acrylic polyol resin, or a polyester polyol resin, and is most preferably a polyvinyl alcohol-based resin (for example, polyvinyl alcohol resin) because a cured product is excellent in solvent resistance.

Polyvinyl alcohol-based resin of (Y)

When the coating film according to the present embodiment includes the crosslinked product of the polyvinyl alcohol-based resin and the silicon element-containing compound according to the (Y), the polyvinyl alcohol-based resin may be a single compound or may be a mixture of two or more compounds.

A preferable structure of the polyvinyl alcohol-based resin according to the (Y) of the present embodiment preferably has at least one structure selected from the group consisting of a straight structure, a graft type structure, a star type structure, and a three-dimensional network structure.

The polyvinyl alcohol-based resin may have a substituent. The functional group is preferably a reactive substituent, and the reactive substituent is not particularly limited, and is preferably an alcoholic hydroxyl group, a carboxyl group, a carbonyl group, a (meth)acrylic group, an epoxy group, a vinyl group, a hydrolyzable silyl group, a silanol group, hydrosilyl group, or an acetoacetyl group, more preferably an alcoholic hydroxyl group, a carboxyl group, a carbonyl group, a hydrolyzable silyl group, a silanol group, or an acetoacetyl group, further preferably an alcoholic hydroxyl group, a carbonyl group, a silanol group, or an acetoacetyl group, particularly preferably an alcoholic hydroxyl group or an acetoacetyl group, most preferably an acetoacetyl group, because a covalent bond excellent in a water resistance and solvent resistance can be formed with a crosslinking agent high in reaction activity. The functional group may be adopted singly or in combination of two or more kinds thereof.

The polyvinyl alcohol-based resin is more preferably poorly soluble in an electrolytic solution (in particular, non-aqueous electrolytic solution) from the viewpoint that a secondary-battery negative-electrode active material (in particular, non-aqueous secondary-battery negative-electrode active material) is enhanced in resistance to an electrolytic solution and the coating film of the coated carbon material is hardly eluted in an electrolytic solution. In the present embodiment, even if the polyvinyl alcohol-based resin can be dissolved in an electrolytic solution (non-aqueous electrolytic solution), the resin can react with a crosslinking agent to be thereby cured, and thus can be poorly soluble in an electrolytic solution. The "poor solubility" in an electrolytic solution (in particular, non-aqueous electrolytic solution) means that, when the polyvinyl alcohol-based resin, or a cured product by reaction of the resin and a silicon element-containing compound as a crosslinking agent is immersed in a mixed solvent of ethyl carbonate and ethyl methyl carbonate (a volume ratio of 3:7) at 60°C for 5 hours, the dry mass reduction rate before and after immersion is 10% by mass or less.

The film including the crosslinked product of the compounds (Y) of the present embodiment may or may not have a structure derived from any resin other than the polyvinyl alcohol-based resin (other resin), a specific example of such other resin is not particularly limited, and is preferably a polyol-based resin such as an acrylic polyol resin, a polyester polyol resin, or a polyether polyol resin, a silicone resin having a silanol or hydrolyzable silyl group, an epoxy resin, an acrylic resin having a hydrolyzable silyl group, or a polyester resin, more preferably an acrylic polyol resin, a polyester polyol resin, an acrylic resin having a hydrolyzable silyl group, or a polyester resin, particularly preferably an acrylic polyol resin or a polyester polyol resin because such a resin has a plurality of hydroxyl groups or groups to be hydrolyzed into hydroxyl groups in its molecule and can react with a crosslinking agent to thereby form a film poorly soluble in water and an electrolytic solution.

· Polyvinyl alcohol-based (PVOH-based) resin

The polyvinyl alcohol-based resin (hereinafter, sometimes appropriately designated as "PVOH-based resin") is not particularly limited in terms of a specific structure thereof as long as it is a resin having a vinyl alcohol structure unit, and is typically obtained by saponification of a polycarboxylic acid vinyl ester obtained by polymerization of a carboxylic acid vinyl ester monomer such as vinyl acetate, but not limited thereto.

Examples of the PVOH-based resin include a non-modified PVOH or modified PVOH-based resin.

The modified PVOH-based resin may be a copolymerized modified PVOH-based resin synthesized by copolymerizing a monomer other than a vinyl ester-based monomer donating a PVOH structure unit, or may be a post-modified PVOH-based resin obtained by synthesis of a non-modified PVOH and then appropriate modification of a main chain or a side chain by a compound.

Examples of a copolymerizable monomer (unsaturated monomer) usable in the copolymerized modified PVOH-based resin include an olefin compound such as ethylene, propylene, isobutylene, α-octene, α-dodecene, or α-octadecene; a hydroxy group-containing α-olefin compound such as 3-buten-1-ol, 4-penten-1-ol, or 5-hexen-1-ol, or a derivative thereof such as an acylated product thereof; an unsaturated acid compound such as acrylic acid, methacrylic acid, crotonic acid, maleic acid, maleic anhydride, itaconic acid, or undecylenic acid, or a salt thereof; monoester or dialkyl ester; an amide compound such as diacetone acrylamide, acrylamide, or methacrylamide; an olefin sulfonic acid compound such as ethylene sulfonic acid, allyl sulfonic acid, or methallyl sulfonic acid, or a salt thereof; isopropenyl acetate, or a substituted vinyl acetate compound such as 1-methoxyvinyl acetate; or an allyl ether having a poly(oxyalkylene) group, such as polyethylene glycol allyl ether, methoxy polyethylene glycol allyl ether, polypropylene glycol allyl ether, or polyethylene glycol-polypropylene glycol allyl ether.

Examples of the copolymerized modified PVOH-based resin include a PVOH-based resin having a primary hydroxyl group in a side chain. Examples of such a PVOH-based resin include a PVOH-based resin modified by 1,2-diol at a side chain, obtained by copolymerization of 3,4-diacetoxy-1-butene, vinylethylene carbonate, glycerin mono allyl ether or the like; or a PVOH-based resin having a hydroxymethyl group in a side chain, obtained by copolymerization of a hydroxymethylvinylidene diacetate such as 1,3-diacetoxy-2-methylenepropane, 1,3-dipropynyloxy-2-methylenepropane, or 1,3-dibutyronyloxy-2-methylenepropane, and saponification of the resulting copolymer.

Examples of the post-modification method with respect to the post-modified PVOH-based resin include a method involving acetoacetic acid esterification, acetalization, urethanization, etherification, grafting, phosphoric acid esterification, or oxyalkylenation of the non-modified PVOH or the modified PVOH-based resin.

In the present embodiment, the above non-modified PVOH and modified PVOH can be each used. The present embodiment is characterized in that even PVOH to be easily dissolved in cool water, which has not been able to be conventionally used singly in a coating film because of being easily eluted when formed into an aqueous slurry for coating an electrode sheet, can be made poorly soluble by self-crosslinking in the case of the (X) or made poorly soluble due to a crosslinking agent in the case of the (Y), and thus suitably used in the coating film of the carbon material. Thus, in the case of the non-modified PVOH, a partially saponified product can be used which is good in wettability to a hydrophobic surface of graphite and which is hardly increased in viscosity in the form of an aqueous solution even at a low temperature. In the case of the modified PVOH, for example, an anionically modified group-containing PVOH having a functional group excellent in lithium conductivity, such as a carboxylic acid group or a sulfonic acid group, in a side chain, or a nonionically modified group-containing PVOH having a hydroxyalkyl group, an oxyethylene group, or the like in a side chain can also be used, and the resistance of the coating film can be reduced.

The solubility of the PVOH-based resin differs depending on the degree of saponification and the degree of polymerization. The degree of saponification of the PVOH-based resin is not especially limited, and a wide range thereof can be selected because poor solubility can be achieved by combination use with a crosslinking agent in the present embodiment. In the case of the non-modified PVOH, the degree of saponification is usually 70% by mol or more, preferably 78 to 100% by mol, particularly preferably 85 to 99.8% by mol. In general, the PVOH-based resin tends to exhibit the highest rate of elution in water at a degree of saponification of about 88% by mol, although there are some differences depending on the degree of polymerization, the type of modification, and the like. Accordingly, the degree of saponification is preferably higher or lower than about 88% in order to improve water resistance of a cured product reacted with a crosslinking agent.

The PVOH-based resin, when has a modified group, is hardly crystallized even at a high degree of saponification and has a high solubility in water, and thus the degree of saponification is usually 85% by mol or more, preferably 90% by mol or more, more preferably 98% by mol or more. The upper limit is usually 100% by mol or less, preferably 99.8% by mol or less. The degree of saponification is the value measured according to ISO 15023-2.

In the case of coating in a nonaqueous system, PVOH lightly saponified, having a low degree of saponification of 38 to 55% by mol, can be used in combination with a crosslinking agent.

The average degree of polymerization of the PVOH-based resin is not especially limited, and is usually 200 to 3000, preferably 250 to 2800, particularly preferably 300 to 2600 in the case of the non-modified PVOH.

When the PVOH-based resin has a modified group, the average degree of polymerization is usually 100 or more, preferably 200 or more, more preferably 250 or more. This range can easily prevent the solubility from being too high. The average degree of polymerization is usually 4000 or less, preferably 3500 or less, more preferably 2800 or less. This range can easily prevent the solubility from being too low. The average degree of polymerization is the value measured by an aqueous solution viscosity measurement method (ISO 15023-2) .

Only one resin may be used, or two or more resins may be blended and used in the PVOH-based resin. In this case, those different in structure unit may be adopted, those different in degree of saponification may be adopted, or those different in average degree of polymerization may be adopted. When such resins are blended and used, the respective average values of the degrees of saponification and the average degrees of polymerization of all the PVOH-based resins are required to be within the above ranges.

The PVOH-based resin may be partially modified. When the PVOH-based resin is modified, the rate of modification thereof is preferably in a range so that, when 10 g of the resin particle is dispersed in 100 g of water at 20°C under stirring and then heated to 90°C at 1°C/min under stirring, 90% by mass or more thereof is dissolved within 60 minutes.

<Crosslinking agent>

When the coating film according to the present embodiment has a film derived from the silicon element-containing compound as the crosslinking agent according to the (Y), this silicon element-containing compound, but not particularly limited, is described by an example of a crosslinked product (coating film) of the acetoacetyl group-containing PVOH-based resin and the crosslinking agent.

The method for forming the crosslinked product (crosslinking method), here used, is, for example, heat treatment, crosslinking agent treatment, ultraviolet light treatment, or electron beam treatment. In particular, a thermally crosslinked product obtained by crosslinking with heat treatment is preferable.

The type of the silicon element-containing compound as the crosslinking agent used in the crosslinking agent treatment is not especially restricted, and examples include a component having a three-dimensional siloxane crosslinked structure derived from a hydrolyzed polycondensate of alkoxysilane and/or its low condensate, from the viewpoint that a coating film excellent in water resistance and solvent resistance can be formed.

Not only the above silicon element-containing compound, but also any crosslinking agent other than this compound (other crosslinking agent) may be used as the crosslinking agent, or such other crosslinking agent may not be used, and one known as the crosslinking agent of the PVOH-based resin, having a carboxyl group, an acetoacetyl group, or the like, can be used as a specific example of such other crosslinking agent. Examples include an aldehyde compound, for example, a monoaldehyde compound such as formaldehyde or acetaldehyde, or a polyvalent aldehyde compound such as glyoxal, glutaraldehyde, or dialdehyde starch; an amine-based compound such as meta-xylenediamine, norbornane diamine, 1,3-bisaminomethylcyclohexane, bisaminopropylpiperazine, 3,3'-dimethyl-4,4'-diaminodicyclohexylmethane, 4,4'-diaminodicyclohexylmethane, 4,4'-diaminodiphenylmethane, 3,3',5,5'-tetramethyl-4,4'-diaminodiphenylmethane, 3,3',5,5'-tetraethyl-4,4'-diaminodiphenylmethane, 3,3'-dimethyl-4,4'-diamino-5,5'-diethyldiphenylmethane, 4,4'-diaminodiphenyl ether, diaminodiphenylsulfone, 1,2-phenylenediamine, 1,3-phenylenediamine, 1,4-phenylenediamine, 3-methyl-1,2-phenylenediamine, 4-methyl-1,2-phenylenediamine, 2-methyl-1,3-phenylenediamine, 4-methyl-1,3-phenylenediamine, 2-methyl-4,6-diethyl-1,3-phenylenediamine, 2,4-diethyl-6-methyl-1,3-phenylenediamine, 2,4,6-trimethyl-1,3-phenylenediamine, or 2-chloro-1,4-phenylenediamine; a methylol compound such as methylolated urea or methylolated melamine; a reaction product of ammonia and formaldehyde, such as hexamethylenetetramine; a boron compound such as boric acid or borax; a zirconium compound such as basic zirconyl chloride, zirconyl nitrate, or zirconium acetate ammonium; a titanium ortho-ester compound such as tetramethyl titanate; a titanium chelate such as titanium ethylacetoacetonate; a titanium compound such as titanium acylate such as polyhydroxy titanium stearate; an aluminum compound such as an aluminum organic acid chelate such as aluminum acetylacetonate; an organoalkoxysilane compound having an organic reactive group, such as a silane coupling agent; a polyvalent epoxy compound such as ethylene glycol diglycidyl ether, polyethylene glycol diglycidyl ether, glycerin diglycidyl ether, glycerin triglycidyl ether, hexanediol diglycidyl ether, or trimethylolpropane triglycidyl ether; or a polyamide polyamine-epihalohydrin-based resin such as various isocyanate-based compounds or polyamide polyamine-epichlorohydrin-based resins.

The content of the crosslinking agent (in particular, silicon element-containing compound) is preferably 0.05 to 50 parts by mass, more preferably 0.5 to 35 parts by mass, particularly preferably 1 to 25 parts by mass in terms of solid content based on 100 parts by mass of the PVOH-based resin. If the content of the crosslinking agent is too low, the effect by the crosslinking agent tends to be poor, and if the content is more than the upper limit value, the unreacted crosslinking agent is easily eluted or precipitated.

The mixing method of the PVOH-based resin and the crosslinking agent, here used, is, for example, (i) a method for mixing an aqueous solution of the PVOH-based resin and an aqueous solution of the crosslinking agent, (ii) a method for spraying an aqueous solution of the crosslinking agent to the PVOH-based resin in the form of a solid, or (iii) a method for spraying an aqueous solution of the PVOH-based resin to the crosslinking agent in the form of a solid.

The PVOH-based resin may be a commercially available product, or may be synthesized and obtained. In the case of synthesis, the synthesis can be made by a known method.

<Component having three-dimensional crosslinked structure>

When the coating film according to the present embodiment has a film derived from the silicon element-containing compound as the crosslinking agent according to the (Y), a coating film on a surface of and/or in the coated carbon material preferably contains a component having a three-dimensional crosslinked structure, more preferably contains a component having a three-dimensional siloxane crosslinked structure derived from a hydrolyzed polycondensate of alkoxysilane and/or its low condensate. The coating film contains a component having a three-dimensional siloxane crosslinked structure, and thus the PVOH-based resin contained in the coating film can be inhibited from being eluted in an aqueous slurry or an electrolytic solution and the coating film can be inhibited from being swollen.

The three-dimensional crosslinked structure herein is, for example, a structure where organic and/or inorganic crosslinking agent(s) having two or more crosslinkable reactive groups are/is crosslinked, and the three-dimensional siloxane crosslinked structure herein means a steric network structure mainly of a siloxane unit, which is formed by mutual hydrolysis polycondensation of trialkoxysilane having three alkoxy groups per molecule and/or tetraalkoxysilane having four alkoxy groups per molecule, as the alkoxysilane.

The three-dimensional siloxane crosslinked structure is derived from a hydrolyzed polycondensate of the alkoxysilane and/or its low condensate, and has a T unit and/or a Q unit as structural unit(s). The T unit represents a unit where three oxygen atoms are bound to a Si atom, and the Q unit represents a unit where four oxygen atoms are bound to a Si atom. The alkoxysilane may contain any unit other than the T unit and the Q unit, for example, an M unit where one oxygen atom is bound to a Si atom and/or a D unit where two oxygen atoms are bound to a Si atom.

The alkoxysilane and/or its low condensate contain(s) usually 0% by mol or more, and usually 20% by mol or less, preferably 10% by mol or less, particularly preferably 5% by mol or less of the T unit. The alkoxysilane and/or its low condensate contain(s) usually 80% by mol or more, preferably 90% by mol or more, particularly preferably 95% by mol or more, and usually 100% by mol or less of the Q unit. The total amount of the T unit and the Q unit in the alkoxysilane and/or its low condensate is usually 80% by mol or more, preferably 90% by mol or more, more preferably 95% by mol or more, and is usually 100% by mol or less.

The alkoxysilane is not especially limited as long as it is a silane having an alkoxy group, Examples of the alkoxy group include an aliphatic alkoxy group having 1 to 10 carbon atoms, such as a methoxy group, an ethoxy group, a propoxy group, or a butoxy group, or an aromatic alkoxy group having 6 to 15 carbon atoms, such as a phenoxy group or an aryloxy group. An aliphatic alkoxy group having 1 to 4 carbon atoms is preferable from the viewpoint that hydrolysis reaction is easily controlled.

Examples of the alkoxysilane include monoalkoxysilane, dialkoxysilane, trialkoxysilane, or tetraalkoxysilane.

More specific examples include monoalkoxysilane such as vinyldimethylethoxysilane; or dialkoxysilane, for example, dialkyldialkoxysilane such as dimethyldimethoxysilane; diaryldialkoxysilane; an amino group-containing dialkoxysilane such as 3-aminopropylmethyldimethoxysilane or 3-[N-(2-aminoethyl)amino]propylmethyldimethoxysilane; a mercapto group-containing dialkoxysilane such as 3-mercaptopropylmethyldimethoxysilane; a (meth)acryloyl group-containing dialkoxysilane such as 3-(meth)acryloxypropylmethyldimethoxysilane; an alkenyl group-containing dialkoxysilane such as vinyldimethoxymethylsilane or vinylmethyldiethoxysilane; or an epoxy group-containing dialkoxysilane compound such as 3-glycidyloxypropylmethyldimethoxysilane, 3-glycidyloxypropylmethyldiethoxysilane, or 3-glycidyloxypropylethyldiethoxysilane.

Examples also include trialkoxysilane, for example, a trialkoxysilane compound having a hydrosilyl group, such as trimethoxysilane; an alkyltrialkoxysilane compound such as methyltriethoxysilane, methyltrimethoxysilane, ethyltrimethoxysilane, or ethyltriethoxysilane; an aryltrialkoxysilane compound such as phenyltrimethoxysilane or phenyltriethoxysilane; a mercapto group-containing trialkoxysilane such as 3-mercaptopropyltrimethoxysilane; an alkenyl group-containing trialkoxysilane such as vinyltrimethoxysilane; a (meth)acryloyl group-containing trialkoxysilane such as 2-(meth)acryloxyethyltrimethoxysilane or 2-(meth)acryloxyethyltriethoxysilane; an epoxy group-containing trialkoxysilane such as (glycidyloxyalkyl)trialkoxysilane (for example, 3-glycidyloxypropyltrimethoxysilane, 3-glycidyloxypropyltriethoxysilane, or 2-(3,4-epoxycyclohexyl)ethyltrimethoxysilane, or 2-(3,4-epoxycyclohexyl)ethyltriethoxysilane; or a trialkoxysilane having an isocyanate group, such as $\gamma$-isocyanopropyltrimethoxysilane or $\gamma$-isocyanopropyltriethoxysilane.

Further examples include tetraalkoxysilane such as tetramethoxysilane, tetraethoxysilane, tetrapropoxysilane, or tetrabutoxysilane.

In particular, tetraalkoxysilane or trialkoxysilane is preferable, and tetraalkoxysilane is more preferable, because, when a composite coating film with the PVOH-based resin is obtained, a three-dimensional siloxane crosslinked structure highly crosslinked is obtained and the suppression effect of swelling/dissolution of such a coating film is increased. When flexibility is demanded to be imparted to the resulting composite coating film, the ratio of trialkoxysilane may be increased.

These alkoxysilanes may be used singly or in combination of two or more kinds thereof.

From the viewpoint that objects of the present embodiment are suppression of dissolution of and suppression of swelling of a PVOH-based resin coating film due to introduction of a three-dimensional crosslinked structure, more specifically, introduction of a three-dimensional siloxane crosslinked structure, it is preferable that monoalkoxysilane or dialkoxysilane being a lightly crosslinkable component be used as an additive for imparting functionality such as flexibility or lithium ion conductivity and the amount thereof be the smallest amount not promoting dissolution or swelling of a PVOH-based resin component in a composite particle.

The alkoxysilane and/or its low condensate are/is hydrolyzed in a solvent to form a three-dimensional siloxane crosslinked structure as a hydrolyzed polycondensate. The low condensate here mentioned means an oligomer of approximate di- to decamers of the alkoxysilane, and may be an oligomer of approximate di- to octamers thereof or may be an oligomer of approximate di- to pentamers thereof. The solvent here used is, for example, usually a lower alcohol having 1 to 4 carbon atoms, such as methanol, ethanol, or propanol, or a mixture thereof with water.

The component having a three-dimensional crosslinked structure contained in the coated carbon material of the present embodiment, more specifically, the component having a three-dimensional siloxane crosslinked structure contained therein, is contained usually at 0.01% by mass or more, preferably 0.05% by mass or more, and is usually 50% by mass or less, preferably 20% by mass or less, as the Si content based on the total mass of the coated carbon material, in terms of $SiO_2$. The Si content based on the total mass of the coated carbon material will be described in the description section of the amount of coating in the coated carbon material.

The component having a three-dimensional crosslinked structure, more specifically, the component having a three-dimensional siloxane crosslinked structure is contained in a coated carbon material particle within the above scope, thereby enabling dissolution of the PVOH-based resin included in the coating film of the coated carbon material, in water, to be restricted and enabling thickening of an aqueous slurry during coating of an electrode sheet and/or clogging in a slurry filtration step to be prevented. When boric acid is used in combination for a reduction in resistance of the coating film, elution of boric acid from the coating film can be inhibited and low resistance can be maintained over a long period.

The presence of the component having a three-dimensional crosslinked structure, for example, the component having a three-dimensional siloxane crosslinked structure, in the coated carbon material, can be confirmed by, for example, solid $^{29}$Si-NMR (nuclear magnetic resonance spectrum).

If the component having a three-dimensional siloxane crosslinked structure is present, a broad peak group derived from a crosslinked body of a trifunctional silicon unit (T unit: $RSiO_{1.5}$) to which a carbon atom of an organic group R is directly bound and/or a tetrafunctional unit (Q unit: SiOz) to which no carbon atom of an organic group is bound is observed in measurement of a solid $^{29}$Si-NMR spectrum.

A sample for the above solid $^{29}$Si-NMR measurement may be a sample as the coated carbon material including the component having a three-dimensional siloxane crosslinked structure, by itself, or may be a sample obtained by grinding a carbon material particle coated, to peel a coating film, and recovering and drying a coating film fine powder dispersed in water, by filtration and/or centrifugation. When the coated carbon material has a structure where the coated carbon material is coated with a hybrid film of the PVOH-based resin and the SiOz layer, a sample may be obtained by peeling and recovering the hybrid film, or a sample can also be obtained by dissolving the entire PVOH-based resin in the coated carbon material, in water, and then recovering and drying a shell-shaped or gel-shaped silica residue remaining after the dissolution in water, by filtration and/or centrifugation.

<Boron element-containing compound>

When the coating film according to the present embodiment has a film derived from the boron element-containing compound as the crosslinking agent according to the (Y), such a film of the (Y) preferably further contains a boron element-containing compound-derived boron element from the viewpoint of a reduction in resistance.

The content of the boron element-containing compound (also including a portion corresponding to a boron element-containing compound-derived structure.) in the film of the (Y) is not especially restricted, and is preferably 0.01% by mass or more, more preferably 0.03% by mass or more, further preferably 0.05% by mass or more, and preferably 10% by mass or less, more preferably 5% by mass or less, further preferably 1% by mass or less in terms of content based on the total mass of the coated carbon material.

The type of the boron element-containing compound is not especially restricted, examples include boron oxide, metaboric acid, tetraboric acid, borate, an alkoxide having 1 to 3 carbon atoms bound to boron, or lithium borate, and at least one compound selected from boron oxide, metaboric acid, tetraboric acid, borate, and an alkoxide having 1 to 3 carbon atoms bound to boron is preferable because coating can be easily made. These boron element-containing compounds may be used singly or in combination of two or more kinds thereof.

The coating film of the coated carbon material of the present embodiment can be used in combination with any additive for an enhancement in battery performance as long as curability, water resistance, solvent resistance, and long-term characteristics of the coating film are not affected. Preferable examples include a known surfactant or silane coupling agent each contributing to impart wettability or adhesiveness with a negative electrode active material or a binder resin, or an inorganic oxide particle, a lithium compound particle, a conductive polymer such as polyaniline sulfonic acid, or an organic compound forming a complex ion with a lithium ion, such as polyethylene oxide or complex hydrate, each having an effect on a reduction in resistance of the coating film.

<Physical properties of coated carbon material>

· Contents of compound (X) and crosslinked product of compounds (Y)

When the coating film includes the compound (X), the content of the compound (X) based on the total mass of the coated carbon material is not especially restricted, and is usually 0.01% by mass or more, preferably 0.02% by mass or more, more preferably 0.03% by mass or more, further preferably 0.04% by mass or more, particularly preferably 0.05% by mass or more, and preferably 10% by mass or less, more preferably 5% by mass or less, further preferably 2% by mass or less, particularly preferably 0.9% by mass or less from the viewpoint of the effects of an enhancement in charge and discharge efficiency and a reduction in specific surface area.

When the coating film includes the crosslinked product of the compounds (Y), the content of the crosslinked product of the compounds (Y) based on the total mass of the coated carbon material is not especially restricted, and is usually 0.01% by mass or more, preferably 0.02% by mass or more, more preferably 0.03% by mass or more, further preferably 0.04% by mass or more, particularly preferably 0.05% by mass or more, and preferably 10% by mass or less, more preferably 5% by mass or less, further preferably 2% by mass or less, particularly preferably 0.9% by mass or less from the viewpoint of sufficient occurrence of crosslinking.

· Volume-based average particle diameter (average particle diameter d50)

The volume-based average particle diameter (also designated as "average particle diameter d50") of the coated carbon material of the present embodiment is preferably 1 μm or more, more preferably 5 μm or more, further preferably 10 μm or more, particularly preferably 15 μm or more, most preferably, 16.5 μm or more. The average particle diameter d50 is preferably 50 μm or less, more preferably 40 um or less, further preferably 35 μm or less, particularly preferably 30 μm or less, most preferably 25 μm or less. When the average particle diameter d50 is within the above range, a secondary battery (in particular, non-aqueous secondary battery) obtained with the coated carbon material tends to be suppressed in an increase in irreversible capacity and loss in initial battery capacity, and furthermore the occurrence of process failure such as streak in slurry coating, deterioration in high-current-density charge and discharge characteristics, and deterioration in low-temperature input-output characteristics can also be suppressed.

The average particle diameter d50 is herein defined as one determined by suspending 0.01 g of the coated carbon material in 10 mL of an aqueous 0.2% by mass solution of polyoxyethylene sorbitan monolaurate (examples include Tween 20 (registered trademark)) as a surfactant to provide a measurement sample, introducing the measurement sample to a commercially available laser diffraction/scattering particle size distribution measurement apparatus (for example, LA-920 manufactured by HORIBA Ltd.), irradiating the measurement sample with 28 kHz ultrasonic wave at an output of 60 W for 1 minute, and then measuring the volume-based median diameter with the measurement apparatus.

· Degree of circularity

The degree of circularity of the coated carbon material of the present embodiment is 0.88 or more, preferably 0.90 or more, more preferably 0.91 or more. The degree of circularity is preferably 1 or less, more preferably 0.98 or less, further preferably 0.97 or less. When the degree of circularity is within the above range, deterioration in high-current-density charge and discharge characteristics of a secondary battery (in particular, non-aqueous secondary battery) tends to be able to be suppressed. The degree of circularity is defined by the following expression, and a degree of circularity of 1 means a theoretically true sphere.

$$\text{Degree of circularity} = \frac{\text{(Boundary length of corresponding circle having same area as in particle projection shape)}}{\text{(Actual boundary length of particle projection shape)}}$$

The value of the degree of circularity, here adopted, can be, for example, a value determined by using a flow type particle image analyzer (for example, FPIA manufactured by Sysmex Industrial), dispersing about 0.2 g of a specimen (coated carbon material) in an aqueous 0.2% by mass solution (about 50 mL) of polyoxyethylene (20) sorbitan monolaurate as a surfactant, irradiating the dispersion liquid with 28 kHz ultrasonic wave at an output of 60 W for 1 minute, and then indicating the detection range to 0.6 to 400 um and subjecting a particle having a particle diameter in the range from 1.5 to 40 $\mu$m, to measurement.

The method for enhancing the degree of circularity is not particularly limited, but one involving spheronization by application of spheronization treatment is preferable because the shape of an inter-particle void in a negative electrode formed is tailored. Examples of the spheronization treatment include a method for mechanical approximation to a spherical shape by application of a shear force and/or a compression force, and a mechanical/physical treatment method for granulating a plurality of coated carbon material fine particles by an attachment force of a binder or the particles themselves.

· Tap density

The tap density of the coated carbon material of the present embodiment is preferably 0.7 g/cm$^3$ or more, more preferably 0.8 g/cm$^3$ or more, further preferably 0.85 g/cm$^3$ or more, particularly preferably 0.9 g/cm$^3$ or more, most preferably 0.95 g/cm$^3$ or more, preferably 1.3 g/cm$^3$ or less, more preferably 1.2 g/cm$^3$ or less, further preferably 1.1 g/cm$^3$ or less.

When the tap density is within the above range, processability, for example, streak is improved during electrode sheet production and high-speed charge and discharge characteristics are excellent. The carbon density in a particle is hardly increased and thus rollability is also favorable, and a high-density negative electrode sheet tends to be easily formed.

The tap density is defined as the density determined from the volume and the mass of a specimen, which are measured with a powder density measurement tool by dropping the coated carbon material of the present embodiment through a sieve with an aperture of 300 $\mu$m onto a cylindrical tap cell having a diameter of 1.6 cm and a volume of 20 cm$^3$ to fill the cell and then performing tapping of a stroke length of 10 mm 1000 times.

· X-ray parameter

The value of d (interlayer distance) of the lattice place (002 plane) of the coated carbon material of the present embodiment, determined by X-ray diffraction according to the Gakushin method, is preferably 0.335 nm or more and less than 0.340 nm, more preferably 0.339 nm or less, further preferably 0.337 nm or less. When the value of d002 is within the above range, crystallinity of graphite is high, resulting in tendency to suppress an increase in initial irreversible capacity. A value of 0.335 nm corresponds to the theoretical value of graphite.

The crystallite size (Lc) of the coated carbon material, determined by X-ray diffraction according to the Gakushin method, is preferably within the range of 1.5 nm or more, more preferably 3.0 nm or more. When the size is within the above range, a particle not too low in crystallinity is obtained and deterioration in reversible capacity can be suppressed in the case of a secondary battery (in particular, non-aqueous secondary battery) formed. Herein, the lower limit of Lc corresponds to the theoretical value of graphite.

· Ash content

The ash content included in the coated carbon material of the present embodiment is preferably 2% by mass or less, more preferably 1.5% by mass or less, further preferably 1.0% by mass or less based on the total mass of the coated carbon material. The lower limit of the ash content is preferably 1 ppm or more.

When the ash content is within the above range, degradation in battery performance due to reaction of the coated carbon material and an electrolytic solution during charge and discharge can be suppressed to a negligible level in the case of a secondary battery (in particular, non-aqueous secondary battery) formed. In addition, excessive amounts of time and energy, and facilities for contamination prevention are not needed for production of the coated carbon material, and thus an increase in cost is also suppressed.

· BET specific surface area (SA)

The specific surface area (SA) of the coated carbon material of the present embodiment, measured by the BET method, is preferably 1 $m^2/g$ or more, more preferably 2 $m^2/g$ or more, further preferably 2.5 $m^2/g$ or more, particularly preferably 2.8 $m^2/g$ or more, most preferably 3 $m^2/g$ or more, and preferably 11 $m^2/g$ or less, more preferably 9 $m^2/g$ or less, further preferably 8 $m^2/g$ or less, particularly preferably 7 $m^2/g$ or less, most preferably 6 $m^2/g$ or less.

When the specific surface area is within the above range, a site for passage of Li can be sufficiently ensured, and thus high-speed charge and discharge characteristics and output characteristics are excellent and the activity of an active material to an electrolytic solution can also be properly suppressed to thereby lead to no increase in initial irreversible capacity, resulting in a tendency to enable a high-capacity battery to be produced.

When a negative electrode is formed with the coated carbon material, an increase in reactivity thereof with an electrolytic solution can be suppressed and gas generation can be suppressed, and thus a preferable secondary battery (in particular, non-aqueous secondary battery) can be provided.

The BET specific surface area is defined as the value obtained by subjecting a coated carbon material specimen preliminarily dried under reduced pressure at 100°C for 3 hours under a nitrogen stream and then cooled to a liquid nitrogen temperature, to measurement with a surface area meter (for example, specific surface area measurement apparatus "Gemini 2360" manufactured by Shimadzu Corporation), according to a nitrogen adsorption BET one-point method.

· Pore volume in range from 10 nm to 1000 nm

The pore volume in the range from 10 nm to 1000 nm in the coated carbon material of the present embodiment is a value measured by a mercury intrusion method (mercury porosimetry), and is preferably 0.01 mL/g or more, more preferably 0.03 mL/g or more, further preferably 0.05 mL/g or more, and preferably 0.3 mL/g or less, more preferably 0.25 mL/g or less, further preferably 0.2 mL/g or less.

When the pore volume in the range from 10 nm to 1000 nm is within the above range, a void into which an electrolytic solution (in particular, non-aqueous electrolytic solution) can penetrate is hardly decreased and a tendency to cause too late intercalation/deintercalation of a lithium ion in rapid charge and discharge and accordingly deposition of lithium metal and deterioration in cycle characteristics can be more avoided. Furthermore, a tendency to cause easy absorption of a binder in such a void in electrode sheet production and accordingly deterioration in electrode sheet strength and deterioration in initial efficiency can also be more avoided.

The total pore volume in the coated carbon material of the present embodiment is preferably 0.1 mL/g or more, more preferably 0.2 mL/g or more, further preferably 0.25 mL/g or more, particularly preferably 0.5 mL/g or more. The total pore volume is preferably 10 mL/g or less, more preferably 5 mL/g or less, further preferably 2 mL/g or less, particularly preferably 1 mL/g or less.

When the total pore volume is within the above range, the amount of a binder in electrode sheet formation is not required to be excess, and the dispersion effect of a thickener and/or a binder in electrode sheet formation is also easily obtained.

The average pore size of the coated carbon material of the present embodiment is preferably 0.03 $\mu$m or more, more preferably 0.05 $\mu$m or more, further preferably 0.1 um or more, particularly preferably 0.5 um or more. The average pore size is preferably 80 um or less, more preferably 50 um or less, further preferably 20 $\mu$m or less.

When the average pore size is within the above range, the amount of a binder in electrode sheet formation is not required to be excess, and deterioration in high-current-density charge and discharge characteristics of a battery tends to be able to be avoided.

A mercury porosimeter (AutoPore 9520: manufactured by Micromeritics Instrument Corporation) can be used as the apparatus for mercury porosimetry. A specimen (coated carbon material) is weighed so as to be in an amount of about 0.2 g, enclosed in a cell for a powder, and subjected to pre-treatment by degassing under vacuum (50 $\mu$mHg or less) at 25°C for 10 minutes.

Subsequently, the pressure is reduced to 4 psia (about 28 kPa) and mercury is introduced to the cell, and the pressure is increased stepwise from 4 psia (about 28 kPa) to 40000 psia (about 280 MPa) and then reduced to 25 psia (about 170 kPa).

The number of steps during pressure increase is 80 points or more, and the amount of mercury intrusion is measured after an equilibrium time of 10 seconds in each step. A pore distribution is calculated based on the mercury intrusion curve thus obtained, by use of the Washburn's equation.

The calculation is made under the assumption that the surface tension ($\gamma$) and the contact angle ($\psi$) of mercury

are respectively 485 dyne/cm and 140°. The average pore size is defined as the pore size at which the cumulative pore volume corresponds to 50%.

· True density

The true density of the coated carbon material of the present embodiment is preferably 1.9 $g/cm^3$ or more, more preferably 2 $g/cm^3$ or more, further preferably 2.1 $g/cm^3$ or more, particularly preferably 2.2 $g/cm^3$ or more, and the upper limit thereof is 2.26 $g/cm^3$. The upper limit is the theoretical value of graphite. When the true density is within the range, crystallinity of carbon is not too low, and an increase in initial irreversible capacity in the case of a secondary battery (in particular, non-aqueous secondary battery) formed can be suppressed.

· Aspect ratio

The aspect ratio of the coated carbon material of the present embodiment in the form of a powder is 1 or more in theory, and is preferably 1.1 or more, more preferably 1.2 or more. The aspect ratio is preferably 10 or less, more preferably 8 or less, further preferably 5 or less, particularly preferably 3 or less.
When the aspect ratio is within the above range, there are tendencies to hardly cause streak with a slurry (negative electrode-forming material) including the coated carbon material in electrode sheet formation, to obtain a uniform coating surface, and to avoid deterioration in high-current-density charge and discharge characteristics of a secondary battery (in particular, non-aqueous secondary battery).
The aspect ratio is expressed by A/B under the assumption that, when a coated carbon material particle is three-dimensionally observed, the longest diameter and the shortest diameter perpendicular thereto are respectively defined as the diameter A and the diameter B. The coated carbon material particle is observed with a scanning electron microscope that can perform magnification observation. Any 50 such coated carbon material particles fixed to an end of a metal having a thickness of 50 microns or less are selected, the stage to which such each specimen is fixed is rotated and inclined to measure A and B, and the average value with respect to A/B is determined.

· Maximum particle diameter dmax

The maximum particle diameter dmax of the coated carbon material of the present embodiment is preferably 200 $\mu$m or less, more preferably 150 $\mu$m or less, further preferably 120 $\mu$m or less, particularly preferably 100 $\mu$m or less, most preferably 80 $\mu$m or less. When the dmax is within the above range, the occurrence of any process failure such as streak tends to be able to be suppressed.
The maximum particle diameter is defined as the value of the largest particle diameter in particle measurement, in a particle size distribution obtained in measurement of the average particle diameter d50.

· Raman R value

The Raman R value of the coated carbon material of the present embodiment is preferably 0.1 or more, more preferably 0.15 or more, further preferably 0.2 or more. The Raman R value is preferably 0.6 or less, more preferably 0.5 or less, further preferably 0.4 or less.
The Raman R value is defined as one calculated as the intensity ratio ($I_B/I_A$) determined in measurement of the intensity $I_A$ of the peak $P_A$ around 1580 $cm^{-1}$ and the intensity $I_B$ of the peak $P_B$ around 1360 $cm^{-1}$ in a Raman spectrum determined by Raman spectroscopy.
Herein, the "around 1580 $cm^{-1}$" refers to the range from 1580 to 1620 $cm^{-1}$ and the "around 1360 $cm^{-1}$" refers to the range from 1350 to 1370 $cm^{-1}$.
When the Raman R value is within the above range, there are tendencies to hardly increase crystallinity of a coated carbon material particle surface, to hardly orient any crystal in a parallel direction to a negative electrode sheet in the case of an increase in density, and to avoid deterioration in load characteristics. There are further tendencies to also hardly disturb any crystal on the particle surface, to suppress an increase in reactivity of a negative electrode with an electrolytic solution, and enable deterioration in charge and discharge efficiency of a secondary battery (in particular, non-aqueous secondary battery) and increase of gas generation to be avoided.
The Raman spectrum can be measured with a Raman spectrometer. Specifically, a particle to be measured is naturally dropped into a measurement cell to thereby pack a specimen, and measurement is performed while the interior of the measurement cell is irradiated with argon ion laser and the measurement cell is rotated in a plane perpendicular to such laser light. Measurement conditions are as follows.

Wavelength of argon ion laser light: 514.5 nm

Laser power on specimen: 25 mW
Resolution: 4 cm$^{-1}$
Measurement range: 1100 cm$^{-1}$ to 1730 cm$^{-1}$
Peak intensity measurement, peak half-value width measurement: background treatment, smoothing treatment (convolution by simple average, 5 points)

· Amount of DBP oil absorption

The amount of DBP (dibutyl phthalate) oil absorption of the coated carbon material of the present embodiment is preferably 65 ml/100 g or less, more preferably 62 ml/100 g or less, further preferably 60 ml/100 g or less, particularly preferably 57 ml/100 g or less. The amount of DBP oil absorption is preferably 30 ml/100 g or more, more preferably 40 ml/100 g or more.

When the amount of DBP oil absorption is within the above range, it is meant that the degree of progress of spheronization of the coated carbon material is sufficient, there is a tendency to hardly cause streak in coating with a slurry including the coated carbon material, and there is a tendency to avoid decrease of a reaction surface because of the presence of a pore structure also in a particle.

The amount of DBP oil absorption is defined as the value measured by charging 40 g of a measurement material (coated carbon material) and setting the dripping rate to 4 ml/min, the rotational speed to 125 rpm, and the set torque to 500 N·m, according to ISO 4546. For example, Absorptometer Type E manufactured by Brabender Technologies Inc. can be used in such measurement.

· Average particle diameter d10

The particle diameter (d10) at which the cumulative particle diameter from the small particle side in volume-based measurement of the coated carbon material of the present embodiment reaches 10% is preferably 30 μm or less, more preferably 20 μm or less, further preferably 17 um or less, preferably 1 μm or more, more preferably 3 um or more, further preferably 5 um or more, particularly preferably 8 μm or more, most preferably 10 μm or more.

When the d10 is within the above range, a tendency of particle aggregation is not too strong, and the occurrence of any process failure such as an increase in slurry viscosity, and deterioration in electrode strength and deterioration in initial charge and discharge efficiency in a secondary battery (in particular, non-aqueous secondary battery) can be avoided. In addition, deterioration in high-current-density charge and discharge characteristics, and deterioration in low-temperature input-output characteristics tends to be able to be avoided.

The d10 is defined as the value at which the particle frequency percentage reaches 10% in accumulation from the smaller particle diameter in a particle size distribution obtained in measurement of the average particle diameter d50.

· Average particle diameter d90

The particle diameter (d90) at which the cumulative particle diameter from the small particle side in volume-based measurement of the coated carbon material of the present embodiment reaches 90% is preferably 100 μm or less, more preferably 70 um or less, further preferably 60 μm or less, still further preferably 50 μm or less, particularly preferably 45 μm or less, most preferably 42 μm or less, and preferably 20 μm or more, more preferably 26 μm or more, further preferably 30 um or more, particularly preferably 34 μm or more.

When the d90 is within the above range, there are tendencies to enable deterioration in electrode strength and deterioration in initial charge and discharge efficiency to be avoided in a secondary battery (in particular, non-aqueous secondary battery) and also to enable the occurrence of process failure such as streak in coating with slurry, deterioration in high-current-density charge and discharge characteristics, and deterioration in low-temperature input-output characteristics to be avoided.

The d90 is defined as the value at which the particle frequency percentage reaches 90% in accumulation from the smaller particle diameter in a particle size distribution obtained in measurement of the average particle diameter d50.

· Elution ability of resin

The elution ability of the acetoacetyl group-containing resin according to the (X) or the polyvinyl alcohol-based resin according to the (Y) (hereinafter, these resins are also collectively simply referred to as "resin".) in the coated carbon material of the present embodiment can be evaluated by measuring the amount of elution of the resin in a solution in immersion of the coated carbon material in a non-aqueous solvent containing no salt at 25°C for 5 hours.

The amount of elution can be preferably 20% by mass or less based on the mass of the total resin contained in the coated carbon material, and is more preferably 15% by mass or less, further preferably 10% by mass or less, particularly preferably 5% by mass or less.

When the amount is within the above range, the resin is hardly peeled in high-temperature storage or a charge and discharge cycle, and storage characteristics and/or charge and discharge cycle characteristics can be effectively inhibited from being deteriorated.

The solvent used in evaluation of the elution ability is a mixed solvent (volume ratio = 3:7) of ethylene carbonate and ethyl methyl carbonate, not containing any salt.

Examples of the method for quantitatively determining the amount of elution of the resin include a method involving immersing a secondary-battery negative-electrode active material in a solvent component, then recovering and drying a supernatant to thereby remove the solvent, and calculating the proportion of the peak intensity of an elution component relative to the peak intensity in the case of elution at 100% in GPC.

· Evaluation of coating film on basal plane of carbon material

In the coated carbon material of the present embodiment, the basal plane of the carbon material is preferably coated with the coating film from the viewpoint of suppression of an increase in resistance. Furthermore, the coating rate of the basal plane of the carbon material is not especially restricted, and is usually 30% or more, preferably 40% or more, more preferably 50% or more, further preferably 60% or more, and usually 100% or less, preferably 98% or less, more preferably 96% or less, further preferably 95% or less from the viewpoint of an efficient enhancement in initial efficiency.

Whether or not the basal plane of the carbon material is coated with the coating film can be evaluated by simultaneous measurement of an adsorption isotherm and a heat of adsorption with a toluene gas. Specifically, coating of the basal plane with an organic compound can be confirmed by defining a carbon material surface having a heat of adsorption of 67 kJ/mol or more and a high affinity with toluene, as the basal plane, and confirming a decrease in amount of adsorption of toluene in this region as compared with the carbon material before coating.

The method for measuring the coating rate of the basal plane of the carbon material can be made by measurement according to the following procedure with an apparatus for measurement of differential heat of adsorption.

First, the carbon material before coating with an organic compound is subjected to simultaneous measurement of an adsorption isotherm and a heat of adsorption with a toluene gas. A carbon material surface having a heat of adsorption of 67 kJ/mol or more and a high affinity with toluene is defined as the basal plane, and the basal plane specific surface area of the carbon material is determined from a cross-sectional area of a toluene molecule, of $5.5 \times 10^{-19} \text{ m}^2$, and the amount of toluene adsorption to the basal plane.

Next, the coated carbon material coated with an organic compound is also again subjected to simultaneous measurement of an adsorption isotherm and a heat of adsorption with a toluene gas, and the basal plane specific surface area is determined from the amount of toluene adsorption to the basal plane having a heat of adsorption of 67 kJ/mol or more. When a portion of the basal plane of the carbon material as a raw material is coated with an organic compound, the affinity with toluene is decreased to result in a lower heat of adsorption, and thus the coated carbon material coated with an organic compound is decreased in basal plane specific surface area as compared with the carbon material as a raw material.

The coating rate of the basal plane is calculated by the following expression (A).

```
Expression (A)

    Coating rate of basal plane (%) = [1 - (Basal plane

specific surface area of coated carbon material)/(Basal

plane specific surface area of carbon material as raw

material)] × 100
```

<Method for producing coated carbon material>

The coated carbon material according to the above embodiment (also referred to as "secondary-battery negative-electrode active material", or simply referred to as "coated carbon material") is produced by, for example, a method for producing the coated carbon material, the method including a step of mixing the carbon material with at least one compound or compounds selected from the following compound (X) and the following compounds (Y).

(X): an acetoacetyl group-containing resin
(Y): a polyvinyl alcohol-based resin and a silicon element-containing compound
Specifically, the coated carbon material can be produced by the following method.

The following description is made with a carbon material (A), a coating material (B), a secondary-battery negative-electrode active material (C), and a solution (D), for the purpose of convenience.

Compound (X)

When the coating film according to the present embodiment includes the compound (X), a secondary-battery negative-electrode active material where the carbon material (A) contains the coating material (B) can be obtained by adding the acetoacetyl group-containing resin (B1) to an organic solvent, water or a mixed solvent thereof and mixing the solution (D) with the carbon material (A) in mixing step 1), and then performing drying by heating or/and under reduced pressure in drying step 2).

The solvent used is not particularly limited as long as the acetoacetyl group-containing resin (B1) is dissolved or dispersed, and examples preferably include water, ethyl methyl ketone, toluene, acetone, methyl isobutyl ketone, ethanol, or methanol. In particular, water, ethyl methyl ketone, acetone, methyl isobutyl ketone, ethanol, or methanol is more preferable in terms of cost and ease of drying.

Crosslinked product of compounds (Y)

When the coating film according to the present embodiment includes the crosslinked product of the compounds (Y), a secondary-battery negative-electrode active material where the carbon material (A) contains the coating material (B) can be obtained by adding the polyvinyl alcohol-based resin (B1) and a silicon element-containing compound (B2) as a crosslinking agent, and optionally the boron compound (B3) to an organic solvent, water or a mixed solvent thereof and mixing the solution (D) with the carbon material (A) in mixing step 1), and then performing drying by heating or/and under reduced pressure in drying step 2).

For example, a solution of the polyvinyl alcohol-based resin (B1), a solution of the silicon element-containing compound (B2) as a crosslinking agent, and a solution of the boron compound (B3) may be separately prepared, or a solution of the polyvinyl alcohol-based resin (B1), a solution of the silicon element-containing compound (B2), and a solution of the boron compound (B3) may be added to the same solvent to thereby prepare a solution. A solution of the polyvinyl alcohol-based resin (B1), a solution of the silicon element-containing compound (B2), and a solution of the boron compound (B3) are preferably separately prepared in terms of the initial charge and discharge efficiency of a lithium ion secondary battery.

The solvent used is not particularly limited as long as the polyvinyl alcohol-based resin (B1), the silicon element-containing compound (B2) and the boron compound (B3) are dissolved or dispersed, and examples preferably include water, ethyl methyl ketone, toluene, acetone, methyl isobutyl ketone, ethanol, or methanol. In particular, water, ethyl methyl ketone, acetone, methyl isobutyl ketone, ethanol, or methanol is more preferable in terms of cost and ease of drying.

Step (1): mixing step

Compound (X)

When the coating film according to the present embodiment includes the compound (X), the method for mixing the carbon material (A) with the coating material (B) is not particularly restricted, and can desirably provide uniform coating of a surface of the carbon material (A) with the organic compound (B) from the viewpoint of a decrease in initial amount of gas and a decrease in amount of gas stored.

Examples of the mixing method include a method involving stirring with a stirring blade in a fixed container, a method involving rolling and mixing a powder with rotation of a container by itself, or a method involving fluidizing and mixing by airflow. In particular, a method involving stirring with a stirring blade in a fixed container is preferable from the viewpoint of mixing uniformity.

Examples of the fixed container here include an inverse conical type, a longitudinally mounted cylinder type, a laterally mounted cylinder type, or a U-type trough container, and a laterally mounted cylinder type container is preferable from the viewpoint of attachment in a machine and uniform mixing ability.

Examples of the shape of the stirring blade include, in the case of a horizontal axis system, a ribbon type, screw type, uniaxial paddle type, multiaxial paddle type, anchor type, or fork type shape, and, in the case of a vertical axis system, a ribbon type, screw type, planetary type, conical screw type, or downside high-speed rotary blade shape, and a fork type shape in the case of a horizontal axis system is preferable from the viewpoint of uniform mixing ability.

For example, a mixer being a laterally mounted cylinder type container having a horizontal axis system of a fork type stirring blade is preferably used.

The peripheral velocity of the stirring blade is preferably 0.1 m/s or more, and is more preferably 1 m/s or more, further preferably 2 m/s or more, particularly preferably 3 m/s or more, and preferably 100 m/s or less, more preferably 80 m/s or less, further preferably 50 m/s or less from the viewpoint of mixing uniformity.

The treatment time is preferably 0.5 min or more, more preferably 1 min or more, further preferably 5 min or more, and preferably 5 hr or less, more preferably 1 hr or less, further preferably 20 min or less. When the treatment time is within the above range, not only treatment ability can be maintained, but also more uniform mixing can be made.

The mixing temperature is preferably 1°C or more, more preferably 10°C or more, and preferably 100°C or less, more preferably 80°C or less. When the mixing temperature is within the above range, an increase in viscosity of the coating material (B) can be suppressed, and more uniform mixing can be made. The cost for temperature control can also be suppressed.

In order to enhance uniform mixing ability, when a solution of the acetoacetyl group-containing resin (B1) is in the state of having a high viscosity or in the form of solid or gel, the coating material (B) is preferably diluted with a solvent in advance in the case of mixing of the carbon material (A), from the viewpoint of uniform mixing.

The ratio of a solution of the coating material (B) diluted, relative to the carbon material (A), may be preferably 1% by mass or more, more preferably 5% by mass or more, preferably 200% by mass or less, more preferably 150% by mass or less. When the ratio is within the above range, mixing can be made at a uniform ratio and the drying time in a subsequent step can be shortened.

When a slurry where the carbon material (A) is dispersed is produced, a solution of the acetoacetyl group-containing resin (B1) may be added. The reason for this is because the effects of an improvement in initial charge and discharge efficiency and suppression of gas generation are obtained and a production process can be simplified also by coating a negative electrode with a secondary-battery negative-electrode active material and then drying the solvent for the polymer (B1) having a crosslinkable substituent.

The slurry where the carbon material (A) is dispersed is one mode for use in a step of coating an electrode surface for a negative electrode, with the secondary-battery negative-electrode active material according to the present embodiment, for production of a negative electrode for a secondary battery.

The concentration of the acetoacetyl group-containing resin (B1) in the solvent in mixing with the carbon material (A) is preferably 0.01% by mass or more, 20% by mass or less. When this range is satisfied, the acetoacetyl group-containing resin (B1) can be expected to be uniformly present on a surface of the carbon material (A) in the secondary-battery negative-electrode active material, and the effects are efficiently obtained.

The concentration of the acetoacetyl group-containing resin (B1) in the solution is preferably 0.03% by mass or more, more preferably 0.05% by mass or more, and preferably 15% by mass or less, more preferably 10% by mass or less.

Crosslinked product of compounds (Y)

When the coating film according to the present embodiment includes the crosslinked product of the compounds (Y), the method for mixing the carbon material (A) with the coating material (B) is not particularly restricted, and can desirably provide uniform coating of a surface of the carbon material (A) with the coating material (B) from the viewpoint of a decrease in initial amount of gas and a decrease in amount of gas stored.

Examples of the mixing method include a method involving stirring with a stirring blade in a fixed container, a method involving rolling and mixing a powder with rotation of a container by itself, or a method involving fluidizing and mixing by airflow. In particular, a method involving stirring with a stirring blade in a fixed container is preferable from the viewpoint of mixing uniformity.

Examples of the fixed container here include an inverse conical type, a longitudinally mounted cylinder type, a laterally mounted cylinder type, or a U-type trough container, and a laterally mounted cylinder type container is preferable from the viewpoint of attachment in a machine and uniform mixing ability.

Examples of the shape of the stirring blade include, in the case of a horizontal axis system, a ribbon type, screw type, uniaxial paddle type, multiaxial paddle type, anchor type, or fork type shape, and, in the case of a vertical axis system, a ribbon type, screw type, planetary type, conical screw type, or downside high-speed rotary blade shape, and a fork type shape in the case of a horizontal axis system is preferable from the viewpoint of uniform mixing ability.

For example, a mixer being a laterally mounted cylinder type container having a horizontal axis system of a fork type stirring blade is preferably used.

The peripheral velocity of the stirring blade is preferably 0.1 m/s or more, and is more preferably 1 m/s or more, further preferably 2 m/s or more, particularly preferably 3 m/s or more, and preferably 100 m/s or less, more preferably 80 m/s or less, further preferably 50 m/s or less from the viewpoint of mixing uniformity.

The treatment time is preferably 0.5 min or more, more preferably 1 min or more, further preferably 5 min or more, preferably 5 hr or less, more preferably 1 hr or less, further preferably 20 min or less. When the treatment time is within the above range, not only treatment ability can be maintained, but also more uniform mixing can be made.

The mixing temperature is preferably 1°C or more, more preferably 10°C or more, preferably 100°C or less, more preferably 80°C or less. When the mixing temperature is within the above range, an increase in viscosity of the coating material (B) can be suppressed, and more uniform mixing can be made. The cost for temperature control can also be suppressed.

When a solution of the polyvinyl alcohol-based resin (B1), the silicon element-containing compound (B2) as a crosslinking agent, and a solution of the boron compound (B3) are separately prepared, such solutions and the carbon material (A) may be simultaneously mixed, such solutions may be mixed and then mixed with the carbon material (A), or any two of a solution of the polyvinyl alcohol-based resin (B1), a solution of the silicon element-containing compound (B2) and a solution of the boron compound (B3) may be mixed with the carbon material (A) and another thereof may be then added, or every one thereof may be sequentially mixed with the carbon material A. The order of mixing may be any order of a solution of the polyvinyl alcohol-based resin (B1), the silicon element-containing compound (B2), and the boron compound (B3), and a drying step may be inserted in the case of sequential mixing. The boron compound (B3) may or may not be included.

In order to enhance uniform mixing ability, when a mode after mixing of any two or all of a solution of the polyvinyl alcohol-based resin (B1), the silicon element-containing compound (B2) and a solution of the boron compound (B3) is in the state of having a high viscosity or in the form of solid or gel, the coating material (B) is preferably diluted with a solvent in advance in the case of mixing of the carbon material (A), from the viewpoint of uniform mixing. Examples further preferably include a method involving diluting the polyvinyl alcohol-based resin (B1) with a solvent and thereafter mixing it with the silicon element-containing compound (B2) and the boron compound (B3) and then with the carbon material (A). The time until mixing with the carbon material (A) after mixing of a solution of the polyvinyl alcohol-based resin (B1) with the silicon element-containing compound (B2), a solution of the boron compound (B3) and the crosslinking agent (B2) is preferably within 1 hr, and is preferably within 20 min from the viewpoint of process time.

The ratio of a solution of the coating material (B) diluted, relative to the carbon material (A), may be preferably 1% by mass or more, more preferably 5% by mass or more, preferably 200% by mass or less, more preferably 150% by mass or less. When the ratio is within the above range, mixing can be made at a uniform ratio and the drying time in a subsequent step can be shortened.

When a slurry where the carbon material (A) is dispersed is produced, a solution of the polyvinyl alcohol-based resin (B1), a solution of the silicon element-containing compound (B2), and a solution of the boron compound (B3) may be added. The reason for this is because the effects of an improvement in initial charge and discharge efficiency and suppression of gas generation are obtained and a production process can be simplified also by coating a negative electrode with a secondary-battery negative-electrode active material and then drying the solvents for the polyvinyl alcohol-based resin (B1), the silicon element-containing (B2), and the boron compound (B3).

The slurry where the carbon material (A) is dispersed is one mode for use in a step of coating an electrode surface for a negative electrode, with the secondary-battery negative-electrode active material according to the present embodiment, for production of a negative electrode for a secondary battery.

In particular, it is preferable from the viewpoint of the initial charge and discharge efficiency to produce a slurry where an active material (A) is dispersed, by separately preparing a solution of the polyvinyl alcohol-based resin (B1), a solution of the silicon element-containing compound (B2), and a solution of the boron compound (B3), and simultaneously mixing such solutions with the carbon material (A). It is more preferable from the viewpoint of allowing for uniform coating of a surface of the carbon material (A) to simultaneously mix a solution of the boron compound (B3) and the carbon material (A) and then filter or dry the mixed liquid, and thereafter mix a solution of the polyvinyl alcohol-based resin (B1) and a silicon element-containing (B2) solution.

The concentration of the polyvinyl alcohol-based resin (B1), the silicon element-containing compound (B2) or the boron compound (B3) in the solvent, in mixing with the carbon material (A), is preferably 0.01% by mass or more, 20% by mass or less. When this range is satisfied, the polyvinyl alcohol-based resin (B1), the silicon element-containing compound (B2), and the boron compound (B3) can be expected to be uniformly present on a surface of the carbon material (A) in the secondary-battery negative-electrode active material, and the effects are efficiently obtained.

The concentration of the polyvinyl alcohol-based resin (B1), the silicon element-containing compound (B2), or the boron compound (B3) in the solution is preferably 0.03% by mass or more, more preferably 0.05% by mass or more, and preferably 15% by mass or less, more preferably 10% by mass or less.

Herein, the above solution concentration means the solution concentration during contact with the carbon material (A), and means the concentration of the coating material (B) as the total of the polyvinyl alcohol-based resin (B1), the silicon element-containing compound (B2), and the boron compound (B3), when a solution of the polyvinyl alcohol-based resin (B1), a solution of the silicon element-containing compound (B2), and a solution of the boron compound (B3) are simultaneously mixed with the carbon material (A) or when such solutions are mixed and then mixed with the carbon material (A). The concentration means each of the concentrations of a solution of the polyvinyl alcohol-based resin (B1), a solution of the silicon element-containing compound (B2), and a solution of the boron compound (B3), when any of a solution of the polyvinyl alcohol-based resin (B1), a silicon element-containing compound (B2), or a solution of the boron compound (B3) is mixed with the carbon material (A) and then other thereof are added.

The amounts of addition of the polyvinyl alcohol-based resin (B1) and the silicon element-containing compound (B2) can be appropriately adjusted, and are preferably regulated so that preferable contents in the above-mentioned secondary-battery negative-electrode active material of the present embodiment are obtained.

Step (2): drying step

When the coating film according to the present embodiment includes the crosslinked product of (X) and when a solution of the acetoacetyl group-containing resin (B1) is dried by heating, a temperature equal to or less than the decomposition temperature of the acetoacetyl group-containing resin (B1) is preferable and a temperature equal to or more than the boiling point of the solvent is more preferable. A temperature of 50°C or more and 300°C or less is preferable. When this range is satisfied, not only a sufficient drying efficiency is achieved and deterioration in battery performance due to the remaining solvent is avoided, but also prevention of decomposition of the acetoacetyl group-containing resin (B1) and prevention of a reduction in effect due to weakened interaction of the carbon material (A) with the acetoacetyl group-containing resin (B1) can be easily achieved.

When the coating film according to the present embodiment includes the crosslinked product of the compounds (Y) and when a solution of the polyvinyl alcohol-based resin (B1) and/or a solution of the silicon element-containing compound (B2) as a crosslinking agent, and a solution of the boron compound (B3) are dried by heating, a temperature equal to or less than the decomposition temperatures of the polyvinyl alcohol-based resin (B1), the silicon element-containing compound (B2), and the boron compound (B3) is preferable and a temperature equal to or more than the boiling point of the solvent is more preferable. A temperature of 50°C or more and 300°C or less is preferable. When this range is satisfied, not only a sufficient drying efficiency is achieved and deterioration in battery performance due to the remaining solvent is avoided, but also prevention of decomposition of the polyvinyl alcohol-based resin (B1), the silicon element-containing compound (B2), and the boron compound (B3), and prevention of a reduction in effect due to weakened interaction of the carbon material (A) with the reactive substituent-containing polymer (B1), the silicon element-containing compound (B2), and the boron compound (B3) can be easily achieved.

The temperature is preferably 250°C or less, and preferably 100°C or more.

When the coating film according to the present embodiment includes the compound (X) and when a solution of the acetoacetyl group-containing resin (B1) is dried under reduced pressure, or when the coating film according to the present embodiment includes the crosslinked product of the compounds (Y) and a solution of the polyvinyl alcohol-based resin (B1) and/or a solution of the silicon element-containing compound (B2), and a solution of the boron compound (B3) are dried under reduced pressure, the pressure is usually 0 MPa or less and -0.2 MPa or more as expressed by a gauge pressure (difference from atmospheric pressure). When this range is satisfied, drying can be relatively efficiently performed. The pressure is preferably -0.03 MPa or less, and preferably -0.15 MPa or more.

The method for drying a mixture of the carbon material (A) and the coating material (B) in the drying step is not particularly restricted, and can desirably provide uniform coating from the viewpoint of a decrease in initial amount of gas and a decrease in amount of gas stored. Such uniform coating can allow for efficient adsorption of the coating material (B) to a specified mesoporous surface, and allows the effect of suppression of gas generation to be easily obtained.

Examples of a heat transfer system include a convective heat transfer system for drying by direct application of hot air, or a conductive heat system for heat transfer from a heat medium via a conduction heating plate, and a conductive heat system is preferable from the viewpoint of yield.

A movement mode of a drying object is achieved with standing drying by drying the drying object being left to still stand, hot air conveyance type drying by drying the drying object being dispersed in hot air or sprayed with hot air, or stirring and drying by drying the drying object being stirred. Here, stirring and drying are preferable from the viewpoint of uniformly drying a particle. The drying step may be performed with the same facilities as or different facilities from those in the mixing step, as long as mixing uniformity and drying ability are retained.

Examples of the stirring and drying method include a method involving drying a mixture in a fixed container under stirring with a stirring blade, a method involving drying a powder being rolled by rotation of a container by itself, or a method involving drying under stirring by fluidizing due to blowing of hot air from a lower portion, a method is preferably used which is a method involving drying a mixture in a fixed container under stirring with a stirring blade, from the viewpoint of uniformity and yield.

Examples of the stirring tank here adopted include an inverse conical type, longitudinally mounted cylinder type, laterally mounted cylinder type, or U-type trough tank, and a laterally mounted cylinder type tank is preferable from the viewpoint of yield/workability/installation space.

Examples of the shape of the stirring blade include, in the case of a horizontal axis system, a ribbon type, screw type, uniaxial paddle type, multiaxial paddle type, anchor type, fork type, or hollow wedge type shape, and, in the case of a vertical axis system, a ribbon type, screw type, conical screw type, or downside high-speed rotary blade shape, and a uniaxial paddle type or fork type shape in the case of a horizontal axis system is preferable.

The peripheral velocity of the stirring blade differs depending on the stirring/drying system, and is preferably 0.01 m/s or more, more preferably 0.2 m/s or more, further preferably 1 m/s or more, particularly preferably 2 m/s or more, preferably 40 m/s or less, more preferably 20 m/s or less, further preferably 10 m/s or less from the viewpoint of uniformity.

In the case of a conductive heat system, examples of the type of a heat medium include a heat medium oil, vapor, or an electric heater, and vapor is preferable in terms of cost. The heat medium is allowed to flow to a stirring tank jacket, a stirring blade, or a stirring shaft, to thereby transfer heat to the drying object via a heat transfer surface, and the heat medium is preferably allowed to flow to all a stirring tank jacket, a stirring blade and a stirring shaft from the viewpoint of heat transfer efficiency.

Examples include a drying machine capable of heating by flowing of a heat medium to a stirring tank jacket in a laterally mounted cylinder type stirring tank, which has a fork type stirring blade of a horizontal shaft system, a CD dryer (KURIMOTO LTD.) capable of heating by flowing of a heat medium to both a rotation shaft provided with a hollow wedge type stirring blade of a system of two mutually-entangled horizontal shafts and a laterally mounted casing with a jacket, a drying machine capable of heating by flowing of a heat medium to a stirring tank jacket and a stirring blade in a laterally mounted cylinder type stirring tank, which has a uniaxial paddle type stirring blade of a horizontal shaft system, RIBOCONE (OKAWARA MFG.CO., LTD.) capable of heating by flowing of a heat medium to a stirring tank jacket in an inverse conical type stirring tank, which has a ribbon type stirring blade of a vertical shaft system, or Amixon (TOYO HITEC Co., LTD.) capable of heating by flowing of a heat medium to a stirring tank jacket and a stirring blade in a longitudinally mounted cylinder type stirring tank, which has a ribbon type stirring blade of a vertical shaft system.

When the coating film according to the present embodiment includes the compound (X), a step of filtering a solution containing the carbon material (A) and the acetoacetyl group-containing resin (B1), and a step of washing the resulting residue with water, before drying, may be included. This is preferable because an excess of the acetoacetyl group-containing resin (B1), not directly attached to the carbon material (A), can be removed and low-temperature input-output characteristics are enhanced without any deterioration in the effects of an enhancement in initial efficiency and of suppression of gas generation.

When the coating film according to the present embodiment includes the crosslinked product of the compounds (Y), a step of filtering a solution containing the carbon material (A), the polyvinyl alcohol-based resin (B1) and the silicon element-containing compound (B2) as a crosslinking agent, and the boron compound (B3), and a step of washing the resulting residue with water, before drying, may be included. This is preferable because excesses of the polyvinyl alcohol-based resin (B1) and the silicon element-containing compound (B2), and the boron compound (B3), not directly attached to the carbon material (A), can be removed and low-temperature input-output characteristics are enhanced without any deterioration in the effects of an enhancement in initial efficiency and of suppression of gas generation.

When the coating film according to the present embodiment includes the crosslinked product of the compounds (Y), other component is contained in the secondary-battery negative-electrode active material of the present embodiment, by adding such other component to an organic solvent, water or a mixed solvent thereof to provide a solution and mixing the solution with the carbon material (A) and then performing drying by heating or/and under reduced pressure, as in the acetoacetyl group-containing resin (B1).

When other component is added, a solution of such other component may be prepared separately from a solution of the acetoacetyl group-containing resin (B1), or such a solution may be prepared by adding such other component to the same solvent as that of a solution of the acetoacetyl group-containing resin (B1).

When the coating film according to the present embodiment includes the crosslinked product of the compounds (Y) and when other component is contained in the secondary-battery negative-electrode active material of the present embodiment, such other component is added to an organic solvent, water or a mixed solvent thereof to provide a solution and the solution is mixed with the carbon material (A) and then dried by heating or/and under reduced pressure, as in the polyvinyl alcohol-based resin (B1), the silicon element-containing compound (B2), and the boron compound (B3).

When other component, for example, an organic compound (B3) is added, a solution of such other component may be prepared separately from a solution of the polyvinyl alcohol-based resin (B1) and/or a solution of the silicon element-containing compound (B2), or such a solution may be prepared by adding such other component to the same solvent as that of a solution of the polyvinyl alcohol-based resin (B1) and/or a solution of the silicon element-containing compound (B2).

<Negative electrode for secondary battery>

A negative electrode for a secondary battery of the present embodiment (hereinafter, also appropriately referred to as "electrode sheet".) not only includes a current collector and a negative electrode active material layer formed on the current collector, but also contains at least the above-mentioned coated carbon material in the active material layer, and is preferably a negative electrode for a non-aqueous secondary battery. A binder is further preferably contained.

The binder here used is one having an olefinic unsaturated bond in its molecule. The type thereof is not particularly restricted, and specific examples thereof include styrene-butadiene rubber, styrene-isoprene-styrene rubber, acrylonitrile-butadiene rubber, butadiene rubber, or an ethylene-propylene-diene copolymer. Such a binder having an olefinic unsaturated bond can be used to thereby reduce swellability of the active material layer in an electrolytic solution. In particular, styrene-butadiene rubber is preferable in terms of availability.

Such a binder having an olefinic unsaturated bond can be used in combination with the above-mentioned coated carbon material to thereby increase strength of a negative electrode. A high strength of a negative electrode can inhibit a negative electrode from being degraded by charge and discharge, resulting in an elongated cycle lifetime. The negative electrode according to the present embodiment is high in adhesion strength between the active material layer and the current collector, and thus it is presumed that the problem of peeling of the active material layer from the current collector in production of a battery by winding of the negative electrode does not occur even if the content of the binder in the active material layer is reduced.

The binder having an olefinic unsaturated bond in its molecule is desirably one high in molecular weight or one high in proportion of an unsaturated bond. Specifically, when the binder has a high molecular weight, one where the weight average molecular weight is preferably in the range of 10000 or more, more preferably 50000 or more, and preferably 1000000 or less, more preferably 300000 or less is desirable. When the binder has a high proportion of an unsaturated bond, one where the molar number of an olefinic unsaturated bond per g of the entire binder is preferably in the range of $2.5 \times 10^{-7}$ mol or more, more preferably $8 \times 10^{-7}$ mol or more, and is preferably in the range of $1 \times 10^{-6}$ mol or less, more preferably $5 \times 10^{-6}$ mol or less is desirable. The binder may satisfy at least any one of the specifications about the molecular weight and the specification about the proportion of an unsaturated bond, and more preferably simultaneously satisfies both specifications. When the molecular weight of the binder having an olefinic unsaturated bond is within the above range, mechanical strength and flexibility are excellent.

The degree of unsaturation of the binder having an olefinic unsaturated bond is preferably 15% or more, more preferably 20% or more, further preferably 40% or more, and is preferably 90% or less, more preferably 80% or less. The degree of unsaturation represents the proportion (%) of a double bond relative to a repeating unit of a polymer.

In the present embodiment, a binder having no olefinic unsaturated bond can also be used in combination with the above binder having an olefinic unsaturated bond as long as the effects of the present invention are not impaired. The mixing ratio of the binder having no olefinic unsaturated bond to the binder having an olefinic unsaturated bond is preferably in the range of 150% by mass or less, more preferably 120% by mass or less.

While the binder having no olefinic unsaturated bond can be used in combination to thereby enhance coatability, a too large amount of combination use causes deterioration in strength of the active material layer.

Examples of the binder having no olefinic unsaturated bond include a polysaccharide thickener such as methyl cellulose, carboxymethyl cellulose, starch, carrageenan, pullulan, guar gum, or xanthan gum, polyether such as polyethylene oxide or polypropylene oxide, vinyl alcohol such as polyvinyl alcohol or polyvinyl butyral, polyacid such as polyacrylic acid or polymethacrylic acid, or a metal salt of such a polymer, a fluorine-containing polymer such as polyvinylidene fluoride, an alkane-based polymer such as polyethylene or polypropylene, and any copolymer thereof.

When the coated carbon material of the present embodiment is used in combination with the above binder having an olefinic unsaturated bond, the ratio of the binder used in the active material layer can be reduced as compared with conventional one. Specifically, the mass ratio between the coated carbon material of the present embodiment and the binder (which may be optionally a mixture of the binder having an unsaturated bond and the binder having no unsaturated bond, as described above.) is preferably in the range of 90/10 or more, more preferably 95/5 or more, and preferably in the range of 99.9/0.1 or less, more preferably 99.5/0.5 or less, in terms of each dry mass ratio. When the proportion of the binder is within the above range, a decrease in capacity and an increase in resistance can be suppressed and furthermore strength of an electrode sheet is also excellent.

The coated carbon material of the present embodiment can be formed by dispersing the coated carbon material of the present embodiment and the binder in a dispersion medium to provide a slurry, and coating the current collector with the slurry. An organic solvent such as alcohol, or water can be used as the dispersion medium. A conductive agent may also be optionally further added to the slurry. Examples of the conductive agent include carbon black such as acetylene black, Ketjen black, or furnace black, an artificial graphite powder, or a fine powder having an average particle diameter of 1 μm or less and including Cu, Ni, or an alloy thereof. The amount of the conductive agent added is preferably about 10% by mass or less relative to the coated carbon material of the present embodiment.

Conventionally known one can be used as the current collector with which the slurry is to be coated. Specific examples include a metal thin film such as rolled copper foil, electrolytic copper foil, or stainless foil. The thickness of the current collector is preferably 4 um or more, more preferably 6 um or more, and preferably 30 um or less, more preferably 20 um or less.

Copper foil having a thickness of 20 um, as the current collector, is coated with the slurry at a width of 5 cm by use of a doctor blade so that the coated carbon material is attached at 10.0 ± 0.3 mg/cm², the resultant is dried at 110°C for 30 minutes and then roll-pressed by use of a roller having a diameter of 20 cm to thereby perform adjustment so that the density of the active material layer is 1.60 ± 0.03 g/cm³, and thus an electrode sheet is obtained.

After the current collector is coated with the slurry, an active material layer is formed under a dry air or inert atmosphere at a temperature of preferably 60°C or more, more preferably 80°C or more, and preferably 200°C or less, more preferably 195°C or less.

The thickness of the active material layer obtained by coating with the slurry and drying is preferably 5 μm or more, more preferably 20 μm or more, further preferably 30 μm or more, and preferably 200 μm or less, more preferably 100 μm or less, further preferably 75 μm or less. When the thickness of the active material layer is within the above range, practical utility of a negative electrode is excellent in terms of balance with the particle diameter of the coated carbon material, and a sufficient function of intercalation/deintercalation of Li, corresponding to a high value of current density, can be obtained.

The density of the coated carbon material in the active material layer differs depending on the application, and is preferably 1.55 g/cm³ or more, more preferably 1.6 g/cm³ or more, further preferably 1.65 g/cm³ or more, particularly preferably 1.7 g/cm³ or more, and preferably 1.9 g/cm³ or less in an application where capacity is emphasized. When the density is within the above range, the capacity per unit volume of a battery can be sufficiently ensured and rate characteristics are also hardly deteriorated.

When the coated carbon material of the present embodiment, described above, is used to produce a negative electrode for a secondary battery, selection of the procedure and other material is not particularly restricted. Also when the negative electrode is used to produce a lithium ion secondary battery, selection of any member necessary for constitution of such a lithium ion secondary battery, such as a positive electrode and an electrolytic solution of such a battery, is not particularly restricted. Hereinafter, the details of the negative electrode for a lithium ion secondary battery and the lithium ion secondary battery, with the coated carbon material of the present embodiment, are exemplified, but any usable material, production method, and the like are not limited to the following specific examples.

<Secondary battery>

The basis configuration of a secondary battery, in particular, a lithium ion secondary battery, according to an embodiment different from the present embodiment, is the same as that of a conventionally known lithium ion secondary battery, and usually includes a positive electrode and a negative electrode each capable of intercalating/deintercalating a lithium ion, and an electrolyte. The secondary battery is particularly preferably a non-aqueous secondary battery. The above-mentioned coated carbon material is used in the negative electrode.

The positive electrode is obtained by forming a positive electrode active material layer containing a positive electrode active material and a binder, on a current collector.

Examples of the positive electrode active material include a metal chalcogen compound capable of intercalating and deintercalating an alkali metal cation such as a lithium ion, in charge and discharge. Examples of the metal chalcogen compound include a transition metal oxide such as vanadium oxide, molybdenum oxide, manganese oxide, chromium oxide, titanium oxide, or tungsten oxide, a transition metal sulfide such as vanadium sulfide, molybdenum sulfide, titanium sulfide, or CuS, a phosphorus-sulfur compound of a transition metal, such as $NiPS_3$ or $FePS_3$, a selenium compound of a transition metal, such as $VSe_2$ or $NbSe_3$, a composite oxide of a transition metal, such as $Fe_{0.25}V_{0.75}S_2$ or $Na_{0.1}CrS_2$, or a composite sulfide of a transition metal, such as $LiCoS_2$ or $LiNiS_2$.

In particular, for example, $V_2O_5$, $V_5O_{13}$, $VO_2$, $Cr_2O_5$, $MnO_2$, $TiO_2$, $MoV_2O_8$, $LiCoO_2$, $LiNiO_2$, $LiMn_2O_4$, $TiS_2$, $V_2S_5$, $Cr_{0.25}V_{0.75}S_2$, or $Cr_{0.5}V_{0.5}S_2$ is preferable, and $LiCoO_2$, $LiNiO_2$ or $LiMn_2O_4$, or a lithium-transition metal composite oxide where such a transition metal is partially substituted with other metal is particularly preferable. Such a positive electrode active material may be used singly or as a mixture of a plurality thereof.

A known binder can be arbitrarily selected and used as the binder for binding the positive electrode active material. Examples include an inorganic compound such as silicate or water glass, or a resin having no unsaturated bond, such as Teflon (registered trademark) or polyvinylidene fluoride. In particular, a resin having no unsaturated bond is preferable. A resin having no unsaturated bond, if used as the resin for binding the positive electrode active material, may be decomposed in oxidation reaction. The weight average molecular weight of such a resin is usually in the range of 10000 or more, preferably 100000 or more, and usually in the range of 3000000 or less, preferably 1000000 or less.

A conductive material for an enhancement in conductivity of the electrode may be contained in the positive electrode active material layer. The conductive material is not particularly restricted as long as a proper amount thereof can be mixed with the active material to thereby impart conductivity, and examples thereof usually include a carbon powder such as acetylene black, carbon black, or graphite, or various metal fibers, powders, or foil.

The positive electrode sheet is formed by forming a slurry of the positive electrode active material and the binder in a solvent and coating a current collector with the slurry, according to the same procedure as in production of the above-mentioned negative electrode. The current collector of the positive electrode, here used, is, for example, aluminum, nickel, or stainless steel (SUS), but is not limited at all.

The electrolyte here used is, for example, an electrolytic solution (in particular, non-aqueous electrolytic solution) where a lithium salt is dissolved in a solvent (in particular, non-aqueous solvent), or such an electrolytic solution which is formed into a gel, rubber, or a solid sheet by an organic polymer compound or the like.

The solvent used in the electrolytic solution is not particularly limited, and can be appropriately selected from known solvents conventionally proposed as solvents of electrolytic solutions. Examples include a linear carbonate compound such as diethyl carbonate, dimethyl carbonate, or ethyl methyl carbonate; a cyclic carbonate compound such as ethylene carbonate, propylene carbonate, or butylene carbonate; a linear ether compound such as 1,2-dimethoxyethane; a cyclic ether compound such as tetrahydrofuran, 2-methyltetrahydrofuran, sulfolane, or 1,3-dioxolane; a linear ester compound such as methyl formate, methyl acetate, or methyl propionate; or a cyclic ester compound such as γ-butyrolactone or γ-valerolactone.

Any one of such solvents may be used singly, or two or more kinds thereof may be used as a mixture. In the case of a mixed solvent, a combination as a mixed solvent containing a cyclic carbonate and a linear carbonate is preferable, and the cyclic carbonate is particularly preferably a mixed solvent of ethylene carbonate and propylene carbonate in that a high ion conductivity can be exhibited even at a low temperature and low-temperature charge impossible characteristics are enhanced. In particular, propylene carbonate in the entire solvent preferably occupies the range of 2% by mass or more and 80% by mass or less, more preferably the range of 5% by mass or more and 70% by mass or less, further preferably the range of 10% by mass or more and 60% by mass or less. If the proportion of propylene carbonate is less than the above, the ion conductivity at a low temperature is lowered, and if the proportion of propylene carbonate is more than the above, a problem is that, when a graphite-based electrode is used, propylene carbonate solvated to a lithium ion is co-inserted between graphite phases to thereby cause degradation of a graphite-based negative electrode active material due to interlayer peeling and provide no sufficient capacity.

The lithium salt used in the electrolytic solution is also not particularly limited, and can be appropriately selected from known lithium salts known to be usable in this application. Examples include an inorganic lithium salt such as halide such as LiCl or LiBr, perhalide such as $LiClO_4$, $LiBrO_4$, or $LiClO_4$, an inorganic fluoride salt such as $LiPF_6$, $LiBF_4$; or $LiAsF_6$, a perfluoroalkanesulfonic acid salt such as $LiCF_3SO_3$ or $LiC_4F_9SO_3$, or a fluorine-containing organic lithium salt such as a perfluoroalkanesulfonic acid imide salt such as Li trifluorosulfoneimide $((CF_3SO_2)_2NLi)$, and in particular, $LiClO_4$, $LiPF_6$, or $LiBF_4$ is preferable.

Such a lithium salt may be used singly or as a mixture of two or more kinds thereof. The concentration of the lithium salt in the electrolytic solution is usually in the range of 0.5 mol/L or more and 2.0 mol/L or less.

When an organic polymer compound is included in the electrolytic solution and formed into a gel, rubber, or a solid sheet and then used, specific examples of the organic polymer compound include a polyether-based polymer compound such as polyethylene oxide or polypropylene oxide; a crosslinked polymer of the polyether-based polymer compound; a vinyl alcohol-based polymer compound such as polyvinyl alcohol or polyvinyl butyral; an insolubilized product of the vinyl alcohol-based polymer compound; polyepichlorohydrin; polyphosphazene; polysiloxane; a vinyl-based polymer compound such as polyvinylpyrrolidone, polyvinylidene carbonate, or polyacrylonitrile; or a polymeric copolymer such as poly(ω-methoxyoligooxyethylene methacrylate), poly(ω-methoxyoligooxyethylene methacrylate-co-methyl methacrylate), or poly(hexaflurorpropylene-vinylidene fluoride).

The electrolytic solution may further include a coating film-forming agent. Specific examples of the coating film-forming agent include a carbonate compound such as vinylene carbonate, vinyl ethyl carbonate, or methyl phenyl carbonate; an alkene sulfide such as ethylene sulfide or propylene sulfide; a sultone compound such as 1,3-propanesultone or 1,4-butanesultone; or an acid anhydride such as maleic anhydride or succinic anhydride. An overcharge inhibitor such as diphenyl ether or cyclohexylbenzene may be further added.

When the above additive is used, the content thereof is preferably usually in the range of 10% by mass or less, in particular, 8% by mass or less, furthermore 5% by mass or less, particularly 2% by mass or less. If the content of the above additive is too high, an adverse effect on other battery characteristics, for example, an increase in initial irreversible capacity and/or deterioration in low-temperature characteristics and rate characteristics may be caused.

A polymer solid electrolyte as a conductor of an alkali metal cation such as a lithium ion can also be used as the electrolyte. Examples of the polymer solid electrolyte include one obtained by dissolving a lithium salt in the above-mentioned polyether-based polymer compound, or a polymer where a terminal hydroxyl group of polyether is substituted with an alkoxide.

A porous separator such as a porous film or a non-woven cloth is usually interposed between the positive electrode and the negative electrode in order to prevent shortage between the electrodes. In this case, the electrolytic solution is used with which the porous separator is impregnated. The material of the separator, here used, is a polyolefin such as polyethylene or polypropylene, or polyether sulfone, and is preferably a polyolefin.

The form of the secondary battery of the present embodiment is not particularly restricted. Examples include a cylinder type where a sheet electrode and the separator are in a spiral state, a cylinder type of an inside-out structure where a pellet electrode and the separator are combined, and a coin type where a pellet electrode and the separator are stacked. The battery can be used which is received in any external case and thus formed into any shape such as a coin type, cylinder type, or square type shape.

The order of assembling the secondary battery of the present embodiment is also not particularly limited, the battery may be assembled according to an appropriate procedure depending on its structure, and, as an example, the battery can be obtained by placing the negative electrode on an external case, providing the electrolytic solution and the separator thereon, further placing the positive electrode so that the positive electrode is opposite to the negative electrode, and swaging the resultant with a gasket or a sealing plate.

EXAMPLES

Next, specific aspects of the present invention will be described with reference to Examples, but the present invention is not limited by these Examples.

Herein, abbreviations in Examples are as follows.

- PVOH (B1-1): acetoacetyl group-containing polyvinyl alcohol (average degree of polymerization: 1500)
- PVOH (B1-2): acetoacetyl group-containing polyvinyl alcohol (average degree of polymerization: 500)
- PVOH (B1-3): acetoacetyl group-free polyvinyl alcohol (average degree of polymerization: 500)
- Labelin: sodium naphthalene sulfonate formalin condensate

<Experiment 1: Compound (X) >

<Production of electrode sheet>

Each coated carbon material of Examples or Comparative Examples, according to Experiment 1, was used to produce an electrode sheet having an active material layer having an active material layer density of $1.60 \pm 0.03$ g/cm$^3$. Specifically, $20.00 \pm 0.02$ g of the coated carbon material, and $20.00 \pm 0.02$ g (0.200 g in terms of solid content) of an aqueous 1% by mass carboxymethyl cellulose sodium salt and $0.42 \pm 0.02$ g (0.2 g in terms of solid content) of an aqueous styrene/butadiene rubber dispersion were stirred for 5 minutes and defoamed for 30 seconds with Awatori Rentaro manufactured by THINKY CORPORATION, to thereby obtain a slurry.

Copper foil having a thickness of 10 um, as a current collector, was coated with the slurry at a width of 10 cm by use of a die coater so that $10.10 \pm 0.3$ mg/cm$^2$ of the coated carbon material was attached onto the copper foil, and the resultant was roll-pressed by use of a roller having a diameter of 20 cm to thereby perform adjustment so that the density of the active material layer was $1.60 \pm 0.03$ g/cm$^3$, to thereby obtain an electrode sheet.

<Production of secondary battery (2032 coin type battery)>

The electrode sheet produced by the above method was punched into a disc shape having a diameter of 12.5 mm, and lithium metal foil was punched into a circular sheet shape having a diameter of 14 mm, to thereby obtain a counter electrode. A separator (made of porous polyethylene film) impregnated with an electrolytic solution where $LiPF_6$ was dissolved in a mixed solvent (volume ratio = 3:7) of ethylene carbonate and ethyl methyl carbonate so as to be at 1 mol/L and 2% by mass of vinylene carbonate was added was disposed between both the electrodes, and each 2032 coin type battery was thus produced.

<Method for measuring discharge capacity and initial efficiency>

The secondary battery (2032 coin type battery) produced by the above method was used to measure the capacity in charge and discharge of the battery by the following measurement method.

Such an electrolytic solution secondary battery was left to still stand at 25°C for 24 hours, thereafter the lithium counter electrode was charged to 5 mV at a constant current corresponding to 0.04 C at 25°C and then charged to 0.004 C at a constant voltage of 5 mV and discharged to 1.5 V at a constant current of 0.08 C. This was repeated three times to thereby complete coin battery evaluation. The initial efficiency (%) was determined from (Discharge capacity at first cycle)/(Charge capacity at first cycle) $\times$ 100. The capacity (mAh/g) was determined from the discharge capacity at the third cycle. The initial efficiencies shown in Table 2 respectively correspond to the initial efficiencies in Examples and Comparative Examples under the assumption that the initial efficiency in Comparative Example 1-1 is 100.0, and the initial efficiencies shown in Table 3 respectively correspond to the initial efficiencies in Examples and Comparative Examples under the assumption that the initial efficiency in Comparative Example 1-2 is 100.0.

<Evaluation of swelling/solubility in water>

The rate of swelling and the rate of dissolution were calculated with the following expressions, by immersing each polyvinyl alcohol film described in Examples or Comparative Examples, in pure water whose mass was 50-fold the film mass (W1), at 25°C for one day, extracting such a composite film and removing pure water attached on a surface, measuring the mass (W2), and then performing drying under reduced pressure at 110°C for 5 hours and measuring the mass (W3).

$$\text{Rate of swelling} = (W2 - W3)/W3 \times 100$$

$$\text{Rate of dissolution} = (W1 - W3)/W1 \times 100$$

<BET specific surface area (SA)>

A coated carbon material specimen was preliminarily dried under a nitrogen stream at 100°C for 30 minutes and then cooled to a liquid nitrogen temperature, and subjected to measurement using nitrogen gas with a fully automatic specific surface area measurement apparatus (Macsorb HM Model-1210 manufactured by MOUNTECH Co., Ltd.) according to a BET one-point method.

<Evaluation of coating of basal plane>

Whether or not a basal plane of a carbon material was coated with a coating film was evaluated by simultaneous measurement of an adsorption isotherm and a heat of adsorption, with toluene gas.

[Reference Example 1-1]

An aqueous PVOH (B1-1) solution having a solid content of 10% by mass was dried to obtain a film. The rate of swelling and the rate of dissolution in water were measured by the measurement method. The results are shown in Table 1.

[Table 1]

Table 1

|  | Rate of dissolution in water (%) | Rate of swelling in water (%) |
|---|---|---|
| Reference Example 1-1 | 2.7 | 262 |

[Example 1-1]

One hundred g of spheronized natural graphite (carbon material (A)) having a SA of 6.4 m$^2$/g and a d50 of 17.3 μm, and 100 g of an aqueous PVOH (B1-1) solution (PVOH (B1-1), solid content concentration: 0.5% by mass) were mixed in a glass container by use of a three-one motor. The resulting sample was dried and subjected to sieving treatment, and thus a powdery coated carbon material (C) was obtained. The coated carbon material (C) obtained was subjected to measurement of the SA and the initial efficiency according to the measurement methods. The results are shown in Table 2. Whether or not the basal plane of the carbon material was coated with the coating film was evaluated by the evaluation method, and as a result, the basal plane was found to be coated with the coating film.

[Example 1-2]

One hundred g of spheronized natural graphite (carbon material (A)) having a SA of 6.4 m$^2$/g and a d50 of 17.3 μm, and 100 g of an aqueous PVOH (B1-1) solution (PVOH (B1-1), solid content concentration: 1.0% by mass) were mixed in a glass container by use of a three-one motor. The resulting sample was dried and subjected to sieving treatment, and thus a powdery coated carbon material (C) was obtained. The coated carbon material (C) obtained was evaluated about characteristics in the same manner as in Example 1-1. The results are shown in Table 2. Whether or not the basal plane of the carbon material was coated with the coating film was evaluated by the evaluation method, and as a result, the basal plane was found to be coated with the coating film.

[Comparative Example 1-1]

Spheronized natural graphite having a SA of 6.4 m$^2$/g and a d50 of 17.3 $\mu$m was used, and an electrode sheet was produced and the initial efficiency was measured by the above methods. The results are shown in Table 2.

[Table 2]

Table 2

| | Resin (% by mass) | Specific surface area (m$^2$/g) | Initial efficiency vs Comparative Example 1-1 |
|---|---|---|---|
| Example 1-1 | 0.5 | 4.1 | 100.6 |
| Example 1-2 | 1.0 | 3.5 | 100.5 |
| Comparative Example 1-1 | 0.0 | 6.4 | 100.0 |

In Reference Example 1-1, a resin (B1) having a hydroxyl group and an acetoacetyl group as self-crosslinking groups could be subjected to heating treatment to thereby form a resin film suppressed in swelling and dissolution in water and having proper elasticity. In Examples 1-1 to 1-2, coating with a resin containing a self-crosslinkable group allowed for a reduction in SA of the graphite and allowed for effective suppression of side reaction with an electrolytic solution, and favorable initial efficiency was exhibited.

[Example 1-3]

One hundred g of spheronized natural graphite (carbon material (A)) having a SA of 6.3 m$^2$/g and a d50 of 16.3 um, and 100 g of an aqueous PVOH (B1-2) solution (PVOH (B1-2), solid content concentration: 0.5% by mass) were mixed in a glass container by use of a three-one motor. The resulting sample was dried and subjected to sieving treatment, and thus a powdery coated carbon material (C) was obtained. The coated carbon material (C) obtained was subjected to measurement of the SA, the capacity, and the initial efficiency according to the measurement methods. The results are shown in Table 3. Whether or not the basal plane of the carbon material was coated with the coating film was evaluated by the evaluation method, and as a result, the basal plane was found to be coated with the coating film.

[Comparative Example 1-2]

Spheronized natural graphite having a SA of 6.3 m$^2$/g and a d50 of 16.3 um was used, and an electrode sheet was produced and the initial efficiency was measured by the above methods. The results are shown in Table 3.

[Comparative Example 1-3]

One hundred g of spheronized natural graphite (carbon material (A)) having a SA of 6.3 m$^2$/g and a d50 of 16.3 $\mu$m, and 100 g of an aqueous PVOH (B1-3) solution (PVOH (B1-3) solid content concentration 0.5% by mass) were mixed in a glass container by use of a three-one motor. The resulting sample was dried and subjected to sieving treatment, and thus a powdery coated carbon material (C) was obtained. The coated carbon material (C) obtained was subjected to measurement of the SA, the capacity, and the initial efficiency according to the measurement methods. The results are shown in Table 3. Whether or not the basal plane of the carbon material was coated with the coating film was evaluated by the evaluation method, and as a result, the basal plane was found to be coated with the coating film.

[Table 3]

Table 3

| | Resin (% by mass) | Specific surface area (m²/g) | Initial efficiency vs Comparative Example 1-2 | Capacity vs Comparative Example 1-2 |
|---|---|---|---|---|
| Example 1-3 | 0.5 | 4.3 | 101.6 | 100.0 |
| Comparative Example 1-2 | 0.0 | 6.3 | 100.0 | 100.0 |
| Comparative Example 1-3 | 0.5 | 4.0 | 101.5 | 99.7 |

In Example 1-3, coating with an acetoacetyl group-containing resin having a self-crosslinkable group allowed for a reduction in SA of the graphite and allowed for effective suppression of side reaction with an electrolytic solution, and favorable initial efficiency could be achieved with capacity being maintained as compared with a conventional art. In particular, it was found from comparison between Example 1-3 and Comparative Example 1-3 that the acetoacetyl group-containing resin could be used to thereby allow capacity to be maintained as compared with a conventional art. The reason for this is considered because selective coating of the basal plane of the acetoacetyl group-containing resin provides no inhibition of intercalation/deintercalation of a Li ion at an edge. It is also considered that an acetoacetyl group can be contained to enhance solvent resistance by a crosslinked structure and to allow path disconnection or the like leading to a reduction in capacity in a battery to be suppressed. It is presumed by the present inventors that such tendencies are also similarly found with respect to other Examples and Comparative Examples.

<Experiment 2: Crosslinked product of compounds (Y)>

<Production of electrode sheet>

Each coated carbon material of Examples 2-1 to 2-5 or Comparative Examples 2-1 and 2-2 described below was used to produce an electrode sheet having an active material layer having an active material layer density of 1.60 $\pm$ 0.03 g/cm$^3$. Specifically, 20.00 $\pm$ 0.02 g of the coated carbon material, and 20.00 $\pm$ 0.02 g (0.200 g in terms of solid content) of an aqueous 1% by mass carboxymethyl cellulose sodium salt solution and 0.42 $\pm$ 0.02 g (0.2 g in terms of solid content) of an aqueous styrene/butadiene rubber dispersion were stirred for 5 minutes and defoamed for 30 seconds with Awatori Rentaro manufactured by THINKY CORPORATION, to thereby obtain a slurry.

Each coated carbon material of Example 2-6 or Comparative Examples 2-3 to 2-5 described below was used to produce an electrode sheet having an active material layer having an active material layer density of 1.60 $\pm$ 0.03 g/cm$^3$. Specifically, 20.00 $\pm$ 0.02 g of the coated carbon material, and 20.00 $\pm$ 0.02 g (0.14 g in terms of solid content) of an aqueous 0.7% by mass carboxymethyl cellulose sodium salt solution and 0.42 $\pm$ 0.02 g (0.2 g in terms of solid content) of an aqueous styrene/butadiene rubber dispersion were stirred for 5 minutes and defoamed for 30 seconds with Awatori Rentaro manufactured by THINKY CORPORATION, to thereby obtain a slurry.

Copper foil having a thickness of 20 $\mu$m, as a current collector, was coated with the slurry at a width of 5 cm by use of an automatic coater manufactured by Tester Sangyo Co., Ltd. and a doctor blade so that the coated carbon material was attached at 10.00 $\pm$ 0.3 mg/cm$^2$, and the resultant was roll-pressed by use of a roller having a diameter of 20 cm to thereby perform adjustment so that the density of the active material layer was 1.60 $\pm$ 0.03 g/cm$^3$, to thereby obtain an electrode sheet.

<Production of secondary batteries (2032 coin type battery and 2016 coin type battery)>

The electrode sheet produced by the above method, in each of Examples 2-1 to 2-5 or Comparative Examples 2-1 and 2-2 described below, was punched into a disc shape having a diameter of 12.5 mm, and lithium metal foil was punched into a circular sheet shape having a diameter of 14 mm, to thereby obtain a counter electrode. A separator (made of porous polyethylene film) impregnated with an electrolytic solution where LiPF$_6$ was dissolved in a mixed solvent (volume ratio = 3:7) of ethylene carbonate and ethyl methyl carbonate so as to be at 1 mol/L and 2% by mass of vinylene carbonate was added was disposed between both the electrodes, and each 2032 coin type battery was thus produced.

The electrode sheet produced by the above method, in each of Example 2-6 or Comparative Examples 2-3 to 2-5 described below, was punched into a disc shape having a diameter of 12.5 mm, and lithium metal foil was punched into a circular sheet shape having a diameter of 14 mm, to thereby obtain a counter electrode. A separator (made of porous polyethylene film) impregnated with an electrolytic solution where $LiPF_6$ was dissolved in a mixed solvent (volume ratio = 3:7) of ethylene carbonate and ethyl methyl carbonate so as to be at 1 mol/L and 2% by mass of vinylene carbonate was added was disposed between both the electrodes, and each 2016 coin type battery was thus produced.

<Method for measuring discharge capacity and initial efficiency>

The secondary batteries (2032 coin type battery and 2016 coin type battery) produced by the above method were used to measure the capacities in charge and discharge of the batteries by the following measurement method.

Such each electrolytic solution secondary battery was left to still stand at 25°C for 24 hours, thereafter the lithium counter electrode was charged to 5 mV at a constant current corresponding to 0.04 C at 25°C and then charged to 0.004 C at a constant voltage of 5 mV and discharged to 1.5 V at a constant current of 0.08 C. This was repeated three times to thereby complete coin battery evaluation. The initial efficiency (%) was determined from (Discharge capacity at first cycle)/(Charge capacity at first cycle) $\times$ 100. The initial efficiencies shown in Table 6 respectively correspond to the initial efficiencies in Examples and Comparative Examples under the assumption that the initial efficiency in Comparative Example 2-1 is 100.0, and the initial efficiencies shown in Table 7 respectively correspond to the initial efficiencies in Examples and Comparative Examples under the assumption that the initial efficiency in Comparative Example 2-5 is 100.0.

<Evaluation of swelling/solubility in water>

The rate of swelling and the rate of dissolution were calculated with the following expressions, by immersing each composite film of polyvinyl alcohol and silica, described in Examples or Comparative Examples, in pure water whose mass was 50-fold the film mass (W1), at 25°C for one day, extracting such a composite film and removing pure water attached on a surface, measuring the mass (W2), and then performing drying under reduced pressure at 110°C for 5 hours and measuring the mass (W3).

$$\text{Rate of swelling} = (W2 - W3)/W3 \times 100$$

$$\text{Rate of dissolution} = (W1 - W3)/W1 \times 100$$

<Evaluation of elution of boron in water>

The amount of elution of boron was quantitatively determined with ICP by stirring each composite film of polyvinyl alcohol, silica, and boron oxide, described in Examples or Comparative Examples, in pure water whose mass was 100-fold the film mass (W1), at 25°C for 1 hour, and separating a supernatant liquid by filtration.

<BET specific surface area (SA)>

A coated carbon material specimen was preliminarily dried under a nitrogen stream at 100°C for 30 minutes and then cooled to a liquid nitrogen temperature, and subjected to measurement using nitrogen gas with a fully automatic specific surface area measurement apparatus (Macsorb HM Model-1210 manufactured by MOUNTECH Co., Ltd.) according to a BET one-point method.

<Peel strength>

The peel strength was measured with a light load type adhesive/coating film peel analyzer (VPA-3S manufactured by Kyowa Interface Science Co., Ltd.), by the following procedure.

In other words, the electrode sheet produced by the above method was dried at 110°C for 24 hours and then cut to a size of 2.5 cm $\times$ 7 cm, a negative electrode surface was allowed to face a test sheet and these were attached by a double-sided tape having a width of 2 cm, and the test sheet was installed on the measurement apparatus and an end of such an electrode sheet sheet was attached to a load cell. Peeling was performed at a peeling angle of 90° and a peeling speed of 50 mm/min, and the force necessary for the peeling was measured.

<Evaluation of coating of basal plane>

Whether or not a basal plane of a carbon material was coated with a coating film was evaluated by simultaneous measurement of an adsorption isotherm and a heat of adsorption, with toluene gas.

[Reference Example 2-1]

Polytetramethoxysilane (Si content in terms of $SiO_2$: 52% by mass) was hydrolyzed in a methanol solvent with aluminum acetylacetone as a catalyst, to prepare a hydrolysis liquid so that the solid content in terms of $SiO_2$ was 16% by mass.
An aqueous PVOH (B1-1) solution (solid content concentration: 10% by mass) and the hydrolysis liquid of polytetramethoxysilane, having a solid content in terms of $SiO_2$ of 16% by mass, were mixed and dried to obtain a composite film so that the contents of PVOH (B1-1) and $SiO_2$ in the film were respectively 80% by mass and 20% by mass. The rate of swelling and the rate of dissolution in water were measured by the measurement method. The results are shown in Table 4.

[Reference Comparative Example 2-1]

A film was obtained by drying an aqueous PVOH (B1-1) solution (solid content concentration: 10% by mass). The rate of swelling and the rate of dissolution in water were measured by the measurement method. The results are shown in Table 4.

[Table 4]

Table 4

|  | Rate of dissolution in water (%) | Rate of swelling in water (%) |
|---|---|---|
| Reference Example 2-1 | 0 | 2.7 |
| Reference Comparative Example 2-1 | 2.7 | 262 |

[Reference Example 2-2]

PVOH (B1-1) having a solid content of 5% by mass, a hydrolysis liquid of polytetramethoxysilane, having a solid content in terms of $SiO_2$ of 16% by mass, and an aqueous boron oxide solution having a solid content of 2% by mass in terms of boron oxide were mixed and dried to obtain a composite film so that the contents of PVOH (B1-1), $SiO_2$, and boron oxide in the film were respectively 47.5% by mass, 47.5% by mass, and 5% by mass. The rate of elution of boron in water was measured by the measurement method. The results are shown in Table 5.

[Reference Comparative Example 2-2]

PVOH (B1-1) having a solid content of 5% by mass, and an aqueous boron oxide solution having a solid content of 2% by mass in terms of boron oxide were mixed and dried to obtain a composite film so that the contents of PVOH (B1-1) and boron oxide in the film were respectively 95% by mass and 5% by mass. The rate of elution of boron in water was measured by the measurement method. The results are shown in Table 5.

[Reference Comparative Example 2-3]

A hydrolysis liquid of polytetramethoxysilane, having a solid content in terms of $SiO_2$ of 16% by mass, and an aqueous boron oxide solution having a solid content of 2% by mass in terms of boron oxide were mixed and dried to obtain a $SiO_2$/boron oxide composite film so that the contents of $SiO_2$ and boron oxide were respectively 95% by mass and 5% by mass. The rate of elution of boron in water was measured by the measurement method. The results are shown in Table 5.

[Table 5]

Table 5

|  | B₂O₃ in film (% by mass) | Rate of elution (% by mass) |
|---|---|---|
| Reference Example 2-2 | 5 | 5 |
| Reference Comparative Example 2-2 | 5 | 90 |
| Reference Comparative Example 2-3 | 5 | 57 |

[Example 2-1]

One hundred g of spheronized natural graphite (carbon material (A)) having a SA of 6.4 m²/g and a d50 of 17.3 um, and 100 g of a solution (solid content concentration of PVOH (B1-1): 0.5% by mass, solid content concentration of hydrolysate of polytetramethoxysilane: 0.5% by mass) in which an aqueous PVOH (B1-1) solution and a hydrolysis liquid of polytetramethoxysilane as a crosslinking agent (B2) were mixed were mixed in a glass container by use of a three-one motor. The resulting sample was dried and subjected to sieving treatment, and thus a powdery coated carbon material (C) was obtained. The coated carbon material (C) obtained was subjected to measurement of the SA and the initial efficiency according to the measurement methods. The results are shown in Table 6. Whether or not the basal plane of the carbon material was coated with the coating film was evaluated by the evaluation method, and as a result, the basal plane was found to be coated with the coating film.

[Example 2-2]

One hundred g of spheronized natural graphite having a SA of 6.4 m²/g and a d50 of 17.3 μm, as a carbon material (A), and an aqueous solution in which boron oxide as a boron compound (B3) was adjusted to a concentration of 0.5% by mass were mixed in a glass container by use of a three-one motor, and dried, and thereafter the resulting powder and 100 g of a solution (solid content concentration of PVOH (B1-1): 0.25% by mass, solid content concentration of hydrolysate of polytetramethoxysilane: 0.25% by mass) in which an aqueous PVOH (B1-1) solution and a hydrolysis liquid of polytetramethoxysilane as a crosslinking agent (B2) were mixed were mixed in a glass container by use of a three-one motor. The resulting sample was dried and subjected to sieving treatment, and thus a powdery coated carbon material (C) was obtained. The coated carbon material (C) obtained was evaluated in the same manner as in Example 2-1. The results are shown in Table 6. Whether or not the basal plane of the carbon material was coated with the coating film was evaluated by the evaluation method, and as a result, the basal plane was found to be coated with the coating film.

[Example 2-3]

One hundred g of spheronized natural graphite having a SA of 6.4 m²/g and a d50 of 17.3 μm, as a carbon material (A), and an aqueous solution in which boron oxide as a boron compound (B3) was adjusted to a concentration of 0.5% by mass were mixed in a glass container by use of a three-one motor, and filtered and dried, and thereafter the resulting powder and 100 g of a solution (solid content concentration of PVOH (B1-1): 0.8% by mass, solid content concentration of hydrolysate of polytetramethoxysilane: 0.2% by mass) in which an aqueous PVOH (B1-1) solution and a hydrolysis liquid of polytetramethoxysilane as a crosslinking agent (B2) were mixed were mixed in a glass container by use of a three-one motor, filtered and then dried, and subjected to sieving treatment, and thus a powdery coated carbon material (C) was obtained. The coated carbon material (C) obtained was evaluated in the same manner as in Example 2-1. The results are shown in Table 6. Whether or not the basal plane of the carbon material was coated with the coating film was evaluated by the evaluation method, and as a result, the basal plane was found to be coated with the coating film.

[Example 2-4]

The same manner as in Example 2-1 was performed except that 100 g of a solution (solid content concentration of PVOH (B1-1): 0.5% by mass, solid content concentration of hydrolysate of polytetramethoxysilane: 0.5% by mass, solid content concentration of boron oxide: 0.5% by mass) in which an aqueous PVOH (B1-1) solution, a hydrolysis liquid of polytetramethoxysilane as a crosslinking agent (B2), and boron oxide as a boron compound (B3) were mixed was used. The coated carbon material (C) obtained was evaluated in the same manner as in Example 2-1. Whether or not the basal plane of the carbon material was coated with the coating film was evaluated by the evaluation method, and as a result, the basal plane was found to be coated with the coating film.

[Comparative Example 2-1]

Spheronized natural graphite having a SA of 6.4 m$^2$/g and a d50 of 17.3 um was used, and an electrode sheet was produced and the initial efficiency was measured by the above methods. The results are shown in Table 6.

[Example 2-5]

The same manner as in Example 2-1 was performed except that granulated and spheronized natural graphite having a SA of 11.9 m$^2$/g and a d50 of 15.7 um was used as a carbon material (A) and 100 g of a solution (solid content concentration of PVOH (B1-1): 1.0% by mass, solid content concentration of hydrolysate of polytetramethoxysilane: 1.0% by mass) in which an aqueous PVOH (B1-1) solution and a hydrolysis liquid of polytetramethoxysilane as a crosslinking agent (B2) were mixed was used. The coated carbon material (C) obtained was evaluated in the same manner as in Example 2-1. The results are shown in Table 7. Whether or not the basal plane of the carbon material was coated with the coating film was evaluated by the evaluation method, and as a result, the basal plane was found to be coated with the coating film.

[Comparative Example 2-2]

Granulated and spheronized natural graphite having a SA of 11.9 m$^2$/g and a d50 of 15.7 um was used, and an electrode sheet was produced and the initial efficiency was measured by the above methods. The results are shown in Table 7.

[Table 6]

Table 6

|  | Resin (% by mass) | Silicon element-containing compound (% by mass) | Boron element-containing compound (% by mass) | Specific surface area (m$^2$/g) | Initial efficiency vs Comparative Example 2-1 |
|---|---|---|---|---|---|
| Example 2-1 | 0.5 | 0.5 | 0.0 | 4.4 | 100.5 |
| Example 2-2 | 0.25 | 0.25 | 0.5 | 4.2 | 102.2 |
| Example 2-3 | 0.8 | 0.2 | 0.5 | 3.6 | 102.1 |
| Example 2-4 | 0.5 | 0.5 | 0.5 | 4.3 | 101.1 |
| Comparative Example 2-1 | 0.0 | 0.0 | 0.0 | 6.4 | 100.0 |

[Table 7]

Table 7

|  | Resin (% by mass) | Silicon element-containing compound (% by mass) | Specific surface area (m$^2$/g) | Initial efficiency vs Comparative Example 2-2 |
|---|---|---|---|---|
| Example 2-5 | 1.0 | 1.0 | 8.6 | 104.1 |
| Comparative Example 2-2 | 0.0 | 0.0 | 11.9 | 100.0 |

In Reference Examples 2-1 and 2-2, the silicon element-containing compound (B2) as a crosslinking agent was combined with the polyvinyl alcohol-based resin (B1) having a hydroxyl group and an acetoacetyl group to thereby allow for formation of a resin film almost not swollen and dissolved in water and having proper elasticity and also allow for suppression of elution of boron in water. In Examples 2-1 to 2-5, coating with the polyvinyl alcohol-based resin containing the crosslinking agent allowed for a reduction in SA of the graphite and allowed for effective suppression of side reaction with an electrolytic solution, and allowed favorable initial efficiency to be exhibited.

On the other hand, Reference Comparative Example 2-1 and Reference Comparative Example 2-2 where no crosslinking agent was added each exhibited very large swelling of the polyvinyl alcohol-based resin and provided almost no suppression of elution of boron. Reference Comparative Example 2-3 where the crosslinking agent was contained, but no polyvinyl alcohol-based resin was contained, provided the film inferior in flexibility and easily cracked, and thus exhibited elution over half, although suppressed in elution of boron. Comparative Examples 2-1 and 2-2 where no coating film was present each caused a deteriorated initial efficiency observed due to excess progression of side reaction with an electrolytic solution.

[Example 2-6]

One hundred g of spheronized natural graphite (carbon material (A)) having a SA of 6.3 $m^2$/g and a d50 of 16.3 um, and 100 g of a solution (solid content concentration of PVOH (B1-3): 0.5% by mass, solid content concentration of hydrolysate of polytetramethoxysilane: 0.125% by mass) in which an aqueous PVOH (B1-3) solution and a hydrolysis liquid of polytetramethoxysilane (crosslinking agent (B2)) were mixed were mixed in a glass container by use of a three-one motor. The resulting sample was dried and subjected to sieving treatment, and thus a powdery coated carbon material (C) was obtained. The SA, the initial efficiency, and the peel strength of the coated carbon material (C) obtained were measured by the measurement methods. The results are shown in Table 8. Whether or not the basal plane of the carbon material was coated with the coating film was evaluated by the evaluation method, and as a result, the basal plane was found to be coated with the coating film. The capacity was also confirmed to be maintained.

[Comparative Example 2-3]

One hundred g of spheronized natural graphite (carbon material (A)) having a SA of 6.3 $m^2$/g and a d50 of 16.3 um, and 100 g of a solution (PVOH (B1-3), solid content concentration: 0.5% by mass) to which an aqueous PVOH (B1-3) solution was mixed were mixed in a glass container by use of a three-one motor. The resulting sample was dried and subjected to sieving treatment, and thus a powdery coated carbon material (C) was obtained. The SA, the initial efficiency, and the peel strength of the coated carbon material (C) obtained were measured by the measurement methods. The results are shown in Table 8. Whether or not the basal plane of the carbon material was coated with the coating film was evaluated by the evaluation method, and as a result, the basal plane was found to be coated with the coating film.

[Comparative Example 2-4]

One hundred g of spheronized natural graphite (carbon material (A)) having a SA of 6.3 $m^2$/g and a d50 of 16.3 um, and 100 g of a solution (solid content concentration of Labelin: 0.5% by mass, solid content concentration of hydrolysate of polytetramethoxysilane: 0.125% by mass) in which an aqueous solution of Labelin (sodium naphthalene sulfonate formalin condensate) and a hydrolysis liquid of polytetramethoxysilane as a crosslinking agent (B2) were mixed were mixed in a glass container by use of a three-one motor. The resulting sample was dried and subjected to sieving treatment, and thus a powdery coated carbon material (C) was obtained. The SA, the initial efficiency, and the peel strength of the coated carbon material (C) obtained were measured by the measurement methods. The results are shown in Table 8.

[Comparative Example 2-5]

Spheronized natural graphite having a SA of 6.3 $m^2$/g and a d50 of 16.3 um was used, and an electrode sheet was produced and the initial efficiency and the peel strength were measured by the above methods. The results are shown in Table 8.

[Table 8]

Table 8

|  | Resin (% by mass) | Silicon element-containing compound (% by mass) | Specific surface area (m²/g) | Initial efficiency vs Comparative Example 2-5 | Peelstrength (mN/mm) |
|---|---|---|---|---|---|
| Example 2-6 | 0.5 | 0.125 | 4.1 | 101.2 | 16.8 |
| Comparative Example 2-3 | 0.5 | 0.0 | 4.0 | 101.5 | 13.9 |
| Comparative Example 2-4 | 0.5 | 0.125 | 4.9 | 99.8 | 19.5 |
| Comparative Example 2-5 | 0.0 | 0.0 | 6.3 | 100.0 | 20.2 |

In Example 2-6, coating with the polyvinyl alcohol-based resin containing the crosslinking agent allowed for effective suppression of side reaction with an electrolytic solution, and allowed favorable initial efficiency and peel strength to be exhibited.

INDUSTRIAL APPLICABILITY

The coated carbon material of the present invention can be used as an active material for a secondary-battery negative-electrode, and thus a lithium ion secondary battery can be provided which not only maintains capacity, but also is excellent in high-temperature storage characteristics and input-output characteristics and generates a small amount of gas, as compared with a conventional art. The method for producing the material is small in number of steps and thus can stably produce the material efficiently and inexpensively.

**Claims**

1. A coated carbon material where a carbon material is coated with a coating film, wherein
the coating film comprises at least one selected from the following compound (X) and a crosslinked product of the following compounds (Y):

    (X): an acetoacetyl group-containing resin, and
    (Y): a polyvinyl alcohol-based resin and a silicon element-containing compound.

2. The coated carbon material according to claim 1, wherein the carbon material is graphite.

3. The coated carbon material according to claim 1 or 2, wherein a basal plane of the carbon material is coated with the coating film.

4. The coated carbon material according to any one of claims 1 to 3, wherein the coating film comprises the compound (X).

5. The coated carbon material according to claim 4, wherein the acetoacetyl group-containing resin contains a hydroxyl group.

6. The coated carbon material according to claim 4 or 5, wherein the acetoacetyl group-containing resin is a polyvinyl alcohol-based resin containing an acetoacetyl group.

7. The coated carbon material according to any one of claims 1 to 3, wherein the coating film comprises the crosslinked product of the compounds (Y).

8. The coated carbon material according to claim 7, wherein the polyvinyl alcohol-based resin contains an acetoacetyl group.

9. The coated carbon material according to claim 7 or 8, wherein the coating film further comprises a boron element-containing compound.

10. The coated carbon material according to claim 9, wherein the boron element-containing compound is at least one compound selected from boron oxide, metaboric acid, tetraboric acid, borate, and an alkoxide having 1 to 3 carbon atoms bound to boron.

11. A method for producing a coated carbon material where a carbon material is coated with a coating film, the method comprising
mixing a carbon material with the following compound (X) and/or the following compounds (Y):

(X): an acetoacetyl group-containing resin, and
(Y): a polyvinyl alcohol-based resin and a silicon element-containing compound.

12. A negative electrode comprising a current collector and an active material layer formed on the current collector, wherein
the active material layer comprises the coated carbon material according to any one of claims 1 to 10.

13. A secondary battery comprising a positive electrode, a negative electrode, and an electrolyte, wherein
the negative electrode is the negative electrode according to claim 12.

## INTERNATIONAL SEARCH REPORT

| International application No. |
| --- |
| **PCT/JP2022/015602** |

**A.  CLASSIFICATION OF SUBJECT MATTER**

*H01M 4/587*(2010.01)i; *H01M 4/133*(2010.01)i; *H01M 4/36*(2006.01)i
FI:  H01M4/587; H01M4/36 C; H01M4/133

According to International Patent Classification (IPC) or to both national classification and IPC

**B.  FIELDS SEARCHED**

Minimum documentation searched (classification system followed by classification symbols)

H01M4/587; H01M4/133; H01M4/36

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
| --- | --- | --- |
| X | JP 2005-129437 A (CANON INC) 19 May 2005 (2005-05-19) | 1-8, 11-13 |
| Y | claims 1-14, paragraphs [0001]-[0038], examples, reference examples | 9-10 |
| X | JP 2017-199639 A (KAWAKAMI, Soichiro) 02 November 2017 (2017-11-02) | 1, 3-6, 11-13 |
| A | claims 1-8, paragraphs [0001]-[0060], examples | 2, 7-10 |
| Y | JP 2019-087443 A (TOYOTA MOTOR CORP) 06 June 2019 (2019-06-06) claims 1-7, paragraphs [0001]-[0012], examples 1-4, fig. 1-4 | 9-10 |
| A | WO 2014/007035 A1 (HITACHI, LTD) 09 January 2014 (2014-01-09) | 1-13 |
| A | JP 2019-087313 A (SAMSUNG ELECTRONICS CO., LTD.) 06 June 2019 (2019-06-06) | 1-13 |

☐ Further documents are listed in the continuation of Box C.       ☑ See patent family annex.

| | | |
| --- | --- | --- |
| * | Special categories of cited documents: | "T"  later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X"  document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&"  document member of the same patent family |
| "P" | document published prior to the international filing date but later than the priority date claimed | |

| Date of the actual completion of the international search | Date of mailing of the international search report |
| --- | --- |
| **13 June 2022** | **21 June 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2022/015602**

| Patent document cited in search report | | | Publication date (day/month/year) | Patent family member(s) | | | Publication date (day/month/year) |
|---|---|---|---|---|---|---|---|
| JP | 2005-129437 | A | 19 May 2005 | (Family: none) | | | |
| JP | 2017-199639 | A | 02 November 2017 | (Family: none) | | | |
| JP | 2019-087443 | A | 06 June 2019 | US | 2019/0140268 | A1 | |
| | | | | claims 1-7, paragraphs [0001]-[0012], examples 1-4, fig. 1-4 | | | |
| | | | | CN | 109755495 | A | |
| WO | 2014/007035 | A1 | 09 January 2014 | JP | 2014-11093 | A | |
| | | | | US | 2015/0349341 | A1 | |
| JP | 2019-087313 | A | 06 June 2019 | US | 2019/0214623 | A1 | |
| | | | | KR | 10-2019-0049327 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3534391 B
- JP H11120992 A
- JP 2011198710 A
- JP 2019087443 A